(19) Europäisches Patentamt
European Patent Office
Office européen des brevets

(11) **EP 4 439 423 A1**

(12) **EUROPEAN PATENT APPLICATION**

(43) Date of publication:
**02.10.2024 Bulletin 2024/40**

(21) Application number: **24157177.7**

(22) Date of filing: **12.02.2024**

(51) International Patent Classification (IPC):
**G06Q 10/08** $^{(2024.01)}$   **G06Q 10/0875** $^{(2023.01)}$
**G06Q 10/0833** $^{(2023.01)}$   **G06Q 10/087** $^{(2023.01)}$
**G06Q 50/04** $^{(2012.01)}$   **G06Q 10/10** $^{(2023.01)}$
**G05B 19/418** $^{(2006.01)}$

(52) Cooperative Patent Classification (CPC):
**G06Q 10/08; G05B 19/4183; G06Q 10/0833;
G06Q 10/087; G06Q 10/0875; G06Q 10/10;
G06Q 50/04**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **31.03.2023 JP 2023057608**

(71) Applicant: **TOYOTA JIDOSHA KABUSHIKI
KAISHA
Toyota-shi, Aichi-ken, 471-8571 (JP)**

(72) Inventors:
• **FUJIWARA, Teruyoshi
TOYOTA-SHI, AICHI-KEN, 471-8571 (JP)**
• **NITTA, Iwao
TOYOTA-SHI, AICHI-KEN, 471-8571 (JP)**
• **SUZUKI, Ryota
NAGOYA, AICHI, 451-6015 (JP)**

(74) Representative: **Cabinet Beau de Loménie
158, rue de l'Université
75340 Paris Cedex 07 (FR)**

(54) **INFORMATION PROCESSING DEVICE, METHOD, AND NON-TEMPORARY STORAGE MEDIUM**

(57)    The server device (1) executes first, second, and third processing. In the first processing, an association between identification information of a first lot of a first product and identification information of a second lot of a second product manufactured using the first product of the first lot is acquired. In the second processing, an association between identification information of the second lot of the second product and identification information of traceability-related information measured in manufacturing processing of the second product of the second lot is acquired. In the third processing, second traceability information obtained by tracing a process to the second product of the second lot is acquired by integrating first traceability information obtained by tracing a process to the first product of the first lot and traceability-related information on the second product of the second lot.

FIG. 3

EP 4 439 423 A1

**Description**

BACKGROUND OF THE INVENTION

1. Field of the Invention

This disclosure relates to an information processing device, a method, and a non-temporary storage medium for a supply chain.

2. Description of Related Art

A system is known in which information is shared among a plurality of companies that constitutes a supply chain. In this regard, for example, Japanese Unexamined Patent Application Publication No. 2004-171146 discloses a system for sharing product information between adjacent suppliers.

SUMMARY OF THE INVENTION

An object of the present disclosure is to provide an information processing device, method, and program that can acquire product traceability information with higher accuracy.

A first aspect of the present disclosure relates to an information processing device including a control unit configured to execute:

first processing of acquiring a first association between identification information of a first lot of a first product manufactured by a first section of a plurality of sections involved in manufacturing a predetermined product, each of which ships products in lot units, and identification information of a second lot of a second product manufactured by a second section of the plurality of sections using the first product of the first lot,
second processing of acquiring a second association between the identification information of the second lot of the second product and identification information of first traceability-related information measured in a manufacturing process of the second product of the second lot, and
third processing of acquiring second traceability information obtained by tracing a process from raw materials or parts to the second product of the second lot by integrating first traceability information and the first traceability-related information based on the first association and the second association, the first traceability information being obtained by tracing a process from the raw materials or the parts to the first product of the first lot.

In the first aspect, when a first value indicating the first traceability information and a second value indicating the first traceability-related information have different units in the third processing, the control unit may convert the first value into a value expressed in the unit of the second value using a predetermined conversion factor.

In the first aspect, in the third processing, when there is a plurality of first lots of the first product used to manufacture the second product of the second lot, the control unit may be configured to acquire the second traceability information using an average value of first values indicating first traceability information for each of the first products of the first lots by integrating the first traceability information and the first traceability-related information.

In the first aspect, in the third processing, when there is a plurality of first lots of the first product used to manufacture the second product of the second lot, the control unit may be configured to acquire the second traceability information by integrating the first traceability information and the first traceability-related information using a weighted average value of first values indicating the first traceability information for each of the first products of the first lots, weighted according to a usage ratio of the first product for each of the first products of the first lots.

In the first aspect, in the third processing, when there is a plurality of first lots of the first product used to manufacture the second product of the second lot, the control unit may be configured to acquire the second traceability information for each of the first products of the first lots.

In the first aspect, in the first processing, the control unit may be configured to receive the first association from an account in the second section, store the first association in a storage unit, and acquire the first association from the storage unit.

In the first aspect, in the third processing, the control unit may be configured to acquire, when the second lot of the second product is specified, identification information of the first lot of the first product that is associated with the identification information of the second lot of the second product in the first association from the storage unit, and acquire the first traceability information on the first product of the first lot corresponding to the acquired identification information.

In the first aspect, in the second processing, the control unit may be configured to receive the second association from the account in the second section, store the second association in a storage unit, and acquire the second association from the storage unit.

In the first aspect, the control unit may be configured to acquire third traceability information obtained by tracing a process from raw materials or parts to the predetermined product of a predetermined lot by executing the first processing, the second processing, and the third processing, in order, from the most upstream section to the most downstream section for each of a plurality of sets of two sections in a relationship between the first section and the second section among the plurality of sections.

In the first aspect, at least some of the plurality of sections may be associated with companies.

In the first aspect, at least some of the plurality of sections may be associated with departments in one company.

In an information processing device according to a second aspect of the present disclosure, traceability information is at least one of a carbon footprint of products (CFP) value, a recycling rate, and a score indicating a degree of fulfilling due diligence (DD) information.

A third aspect of the present disclosure relates to a method that causes a computer to execute:

first processing of acquiring a first association between identification information of a first lot of a first product manufactured by a first section of a plurality of sections involved in manufacturing a predetermined product, each of which ships products in lot units, and identification information of a second lot of a second product manufactured by a second section of the plurality of sections using the first product of the first lot,

second processing of acquiring a second association between the identification information of the second lot of the second product and identification information of first traceability-related information measured in a manufacturing process of the second product of the second lot, and

third processing of acquiring second traceability information obtained by tracing a process from raw materials or parts to the second product of the second lot by integrating first traceability information and the first traceability-related information based on the first association and the second association, the first traceability information being obtained by tracing a process from raw materials or parts to the first product of the first lot.

In the third aspect, in the third processing, when a first value indicating the first traceability information and a second value indicating the first traceability-related information have different units, the computer may convert the first value into a value expressed in the unit of the second value using a predetermined conversion factor.

In the third aspect, in the third processing, when there is a plurality of first lots of the first product used to manufacture the second product of the second lot, the computer may be configured to acquire the second traceability information by integrating the first traceability information and the first traceability-related information using an average value of first values indicating first traceability information for each of the first products of the first lots.

In the third aspect, in the third processing, when there is a plurality of first lots of the first product used to manufacture the second product of the second lot, the computer may be configured to acquire the second traceability information by integrating the first traceability information and the first traceability-related information using a weighted average value of first values indicating the first traceability information for each of the first products of the first lots, weighted according to a usage ratio of the first product for each of the first products of the first lots.

In the third aspect, in the third processing, when there is a plurality of first lots of the first product used to manufacture the second product of the second lot, the computer may be configured to acquire the second traceability information for each of the first products of the first lots.

In the third aspect, in the first processing, the computer may be configured to receive the first association from an account in the second section, store the first association in a storage unit, and acquire the first association from the storage unit.

In the third aspect, in the third processing, the computer is configured to acquire, when the second lot of the second product is specified, identification information of the first lot of the first product that is associated with the identification information of the second lot of the second product in the first association from the storage unit, and acquire the first traceability information on the first product of the first lot corresponding to the acquired identification information.

A fourth aspect of the present disclosure relates to a non-temporary storage medium storing instructions that are executable by one or more processors and cause the one or more processors to execute the following functions. The functions include acquiring a first association between identification information of a first lot of a first product manufactured by a first section of a plurality of sections involved in manufacturing a predetermined product, each of which ships products in lot units, and identification information of a second lot of a second product manufactured by a second section of the plurality of sections using the first product of the first lot, acquiring a second association between identification information of the second lot of the second product and identification information of first traceability-related information measured in a manufacturing process of the second product of the second lot, and, acquiring second traceability information obtained by tracing a process from raw materials or parts to the second product of the second lot by integrating first traceability information and the first traceability-related information based on the first association and the second association, the first traceability information being obtained by tracing a process from the raw materials or the parts to the first product of the first lot.

With each aspect of the present disclosure, product traceability information can be acquired with higher accuracy.

BRIEF DESCRIPTION OF THE DRAWINGS

Features, advantages, and technical and industrial significance of exemplary embodiments of the invention will be described below with reference to the accompanying drawings, in which like signs denote like elements, and wherein:

FIG. 1 is a diagram illustrating an example of a system configuration of an information processing system;
FIG. 2 is an example of a product tree;
FIG. 3 is a diagram illustrating an example of linking transaction information according to a first embodiment;
FIG. 4 is a diagram schematically illustrating an example of a hardware configuration of a server device according to the first embodiment;
FIG. 5 is a diagram schematically illustrating an example of a hardware configuration of a company terminal according to the first embodiment;
FIG. 6 is a diagram schematically illustrating a software configuration of the server device according to the first embodiment;
FIG. 7 is a diagram schematically illustrating a software configuration of the company terminal according to the first embodiment;
FIG. 8 is an example of product information;
FIG. 9 is an example of the transaction information;
FIG. 10 is an example of a transaction information correspondence table;
FIG. 11 is an example of a traceability-related information correspondence table;
FIG. 12 is an example of a lot association setting screen of the company terminal;
FIG. 13 is a diagram illustrating an example of a processing sequence between the server device and the company terminal regarding registration of lot association information;
FIG. 14 is an example of a flowchart of traceability information calculation processing by the server device;
FIG. 15 is an example of a flowchart of acquisition and handing-down processing of traceability information on a predetermined product;
FIG. 16 is a diagram illustrating acquisition of traceability information when there is a plurality of lots of upstream products; and
FIG. 17 is an example of a sequence of traceability information acquisition processing regarding a predetermined product according to a second embodiment.

DETAILED DESCRIPTION OF EMBODIMENTS

In recent years, there has been a desire to track the amount of greenhouse gases emitted from the manufacturing stage of raw materials and parts to the manufacturing stage of products such as automobiles and batteries, that is, to track the carbon footprint.

Here, it is possible to consider a case where a product is supplied by a supply chain that includes a plurality of companies. In one example, at least some companies (intermediate suppliers) included in a supply chain may receive parts from one or more upstream companies, use the received parts to produce their company's own products, and deliver their produced products to companies (downstream companies) in the next process. The most upstream companies can directly produce their company's own products and deliver their produced products to companies in the next process. Some companies in a supply chain may directly deliver (that is, engage in distribution) products received from other companies to another company. A plurality of companies repeat this process, and in the final process, the final product is obtained.

In the case of obtaining automotive products, the supply chain may consist of an OEM manufacturer and a plurality of suppliers. The OEM manufacturer may be a company (the most downstream company) that assembles the final product, and the suppliers may be companies that supply parts, materials, assemblies, or the like that produce the product. Companies included in the supply chain may be determined depending on the product.

In the following description, parts and the like produced by each of the suppliers will be referred to as "products", and the product obtained finally will be referred to as a "final product". In one example, the final product may be supplied to a consumer. In addition, suppliers and OEM manufacturers included in the supply chain are simply referred to as "companies". Further, each of the plurality of levels included in the supply chain is referred to as a "Tier".

In such a system, for example, in order to calculate the total amount of greenhouse gases emitted during the manufacturing of a final product, it is necessary to clarify the product supply relationships among the companies. This is because unless the relationships between the products that constitute the final product are clear, it is difficult to accurately calculate the total amount of greenhouse gases emitted in a plurality of processes. Traceability information refers to information obtained by tracing the process from the manufacture of raw materials and parts to the manufacture of the final product using the raw materials and parts, such as the total amount of greenhouse gases emitted during the manufacture of the final product.

For example, when a product A is shipped in the summer and a product B, which is manufactured using the product A, is manufactured in the winter, the power consumption changes depending on the season, so the amount of greenhouse gases emitted during the manufacture of the product A or the product B may also vary. In this way, when there is a time interval between when the product A is shipped and when the product B is manufactured, if traceability information is calculated without taking this time interval into consideration, there is a risk that a value that does not correspond to the actual situation may be calculated. One aspect of the present disclosure solves the above-described problem.

An information processing device according to a first aspect of the present disclosure includes a control unit. The information processing device is, for example, a server device, a user terminal, or the like. User terminals include, for example, personal computers (PCs), smartphones, tablet terminals, and the like. The control unit is, for example, a processor such as a central processing unit (CPU), a graphics processing unit (GPU), or a digital signal processor (DSP).

In the first aspect, the control unit executes the following first processing, second processing, and third processing. In the first processing, the control unit acquires a first association between identification information of a first lot of a first product manufactured by a first section and the identification information of a second lot of a second product manufactured by a second section using the first product of the first lot. The first section and the second section are a plurality of sections related to the manufacture of a predetermined product. A section is a company or a division in a company that manufactures a product. A lot is a unit of shipment of each of a plurality of sections. The unit of product included in one lot differs from section to section. Further, between lots of the same product shipped from the same section, the number or quantity of the product may be the same or different.

The sections involved in manufacturing a predetermined product are sections that constitute a supply chain regarding the predetermined product. In a supply chain, upstream and downstream are determined by the flow of products. For example, as described above, when a first section manufactures a first product and a second section manufactures a second product using the first product, the first section is the upstream section and the second section is the downstream section. When there is a third section that uses the second product to manufacture a third product, the relationship between the second section and the third section is that the second section is the upstream section and the third section is the downstream section. That is, when focusing on a certain level in the supply chain, the section located on the upstream side is referred to as the upstream section, and the section located on the downstream side is referred to as the downstream section. The most downstream section is a company (OEM manufacturer) or a department of a company that assembles the final product.

The first product is a product of the upstream section in relation to the first section and the second section, and is also referred to as an upstream product. The second product is a product of the downstream section, also referred to as a downstream product. The first product is a material, raw material, parts, or the like for the second product. The second product may be a final product.

In the second processing, the control unit acquires a second association between the identification information of the second lot of the second product and the identification information of the first traceability-related information measured in a manufacturing process of the second product of the second lot. The traceability-related information on the second product differs for each lot of the second product because the measured period differs depending on the lot. The second association makes it possible to specify the first traceability-related information corresponding to the second product of the second lot.

In the third processing, the control unit acquires second traceability information obtained by tracing a process from raw materials or parts to the second product of the second lot by integrating first traceability information and the first traceability-related information based on the first association and the second association. The first traceability information is obtained by tracing a process from raw materials or parts to the first product of the first lot.

Traceability information is information obtained by tracing a process from the manufacture of raw materials, parts, or the like to the manufacture of products using the raw materials, parts, or the like, and is information that is handed down from the upstream product to the downstream product. On the other hand, traceability-related information is information used to acquire traceability information, and is information that is measured or acquired in the manufacturing process of a product. Traceability-related information itself is information that cannot be handed down to downstream companies. The traceability information and traceability-related information include either a Carbon Footprint of Products (CFP) value, a recycling rate or information for acquiring the recycling rate, and a score indicating the degree of fulfilling due diligence (DD) information. The CFP value is, for example, the amount of greenhouse gases emitted during the manufacturing of a product.

According to one aspect of the present disclosure, when acquiring traceability information on a second product, a lot of the second product and a lot of the first product used to manufacture the second product are considered. Thereby, traceability information on the second product for each lot can be acquired with higher accuracy. The fact that the traceability information of a predetermined product is highly accurate means that it corresponds with the actual situation of the manufacturing process from raw materials or parts to the predetermined product.

In one aspect of the present disclosure, in the third processing, when the first value indicating the first traceability information and the second value indicating the first traceability-related information have different units, the control unit may convert the first value to a value expressed in the unit of the second value using a predetermined conversion factor. When the unit of the first traceability information used in the first section and the unit of the first traceability-related information used in the second section are different, the two cannot be correctly integrated. Therefore, with one aspect of the present disclosure, even when the unit of first traceability information used in the first section and the unit of first traceability-related information used in the second section are different, more accurate second traceability information on the second product of the second lot can be acquired.

In one aspect of the present disclosure, in the third processing, when there is a plurality of first lots of the first product used to manufacture the second product of the second lot, the control unit may perform the above integration using (1) an average value of first values indicating first traceability information on the first product of each first lot, or (2) a weighted average value of the first values indicating the first traceability information on the first product of each first lot, weighted according to the usage ratio of the first product of each first lot to acquire second traceability information on the second product of the second lot. Alternatively, in the third processing, when there is a plurality of first lots of the first product used to manufacture the second product of the second lot, the control unit may acquire second traceability information for the first product of each first lot.

According to one aspect of the present disclosure, even when a plurality of first products from a first lot are used to manufacture a second product of a second lot, the first traceability information on the first product of each first lot is taken into consideration, so traceability information on the second product of the second lot can be obtained with higher accuracy.

Hereinafter, specific embodiments of the present disclosure will be described based on the drawings. Unless otherwise specified, the hardware configuration, module configuration, functional configuration, and the like described in each embodiment are not intended to limit the technical scope of the disclosure.

First Embodiment

The information processing system according to a first embodiment is a system that provides information on products supplied by a supply chain that includes a plurality of companies. Information on products is typically information on traceability. Companies belonging to the supply chain may be determined as appropriate depending on the attributes of the products and the like.

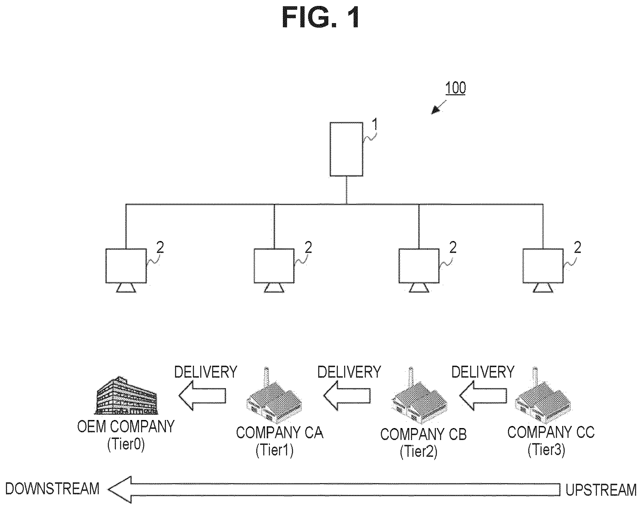

FIG. 1 is a diagram illustrating an example of a system configuration of an information processing system 100. Further, FIG. 1 also illustrates an example of a supply chain according to the first embodiment. The supply chain illustrated in FIG. 1 is composed of an OEM company and a plurality of supplier companies. The example in FIG. 1 assumes a supply chain that manufactures automobiles themselves or products related to automobiles, such as batteries. An OEM company assembles the final product. A plurality of supplier companies (companies CA to CC) supply parts, materials, assemblies, and the like for manufacturing the final product. Each of the supplier companies produces one or more products and delivers the products to a company located one level below. This is repeated by a plurality of companies, and the final product is obtained in the final process (that is, the OEM company).

In the first embodiment, in each level of the supply chain, the side that delivers products is called the upstream side, and the side that purchases the products and produces new products is called the downstream side. In this specification, companies located on the upstream side are referred to as upstream companies, and companies located on the downstream side are referred to as downstream companies. Further, products produced by upstream companies are referred to as upstream products, and products produced by downstream companies are referred to as downstream products. Downstream products include upstream products. Further, in the present embodiment, a level included in the supply chain is referred to as a tier. Tier0 is the lowest level (corresponding to the OEM company) where the final product is assembled, and as the level progresses through Tiers 1, 2, and 3, the flow of the supply chain moves upstream. Depending on which level is focused on, downstream companies may become upstream companies. For example, a company CB located in Tier2 is a downstream company in relation to Tier3, but is an upstream company in relation to Tier1. In this way, the definitions of upstream and downstream companies can change depending on which level is focused on.

The information processing system 100 includes a server device 1 and a plurality of company terminals 2. The company terminal 2 is a terminal corresponding to each of a plurality of companies that constitutes the supply chain. The number of terminals corresponding to each company may be arbitrary. Further, the terminal corresponding to a target company may include a terminal of a company (for example, an agency company) that performs operations related to the target company.

The server device 1 collects information for generating a product tree, which will be described below, from each of the company terminals 2, and generates the product tree based on the collected information. Further, the server device 1 can execute traceability-related processing (typically, processing that calculates carbon dioxide emission amounts, and the like) based on the generated product tree. Further, the execution results of the processing can be transmitted to the company terminals 2.

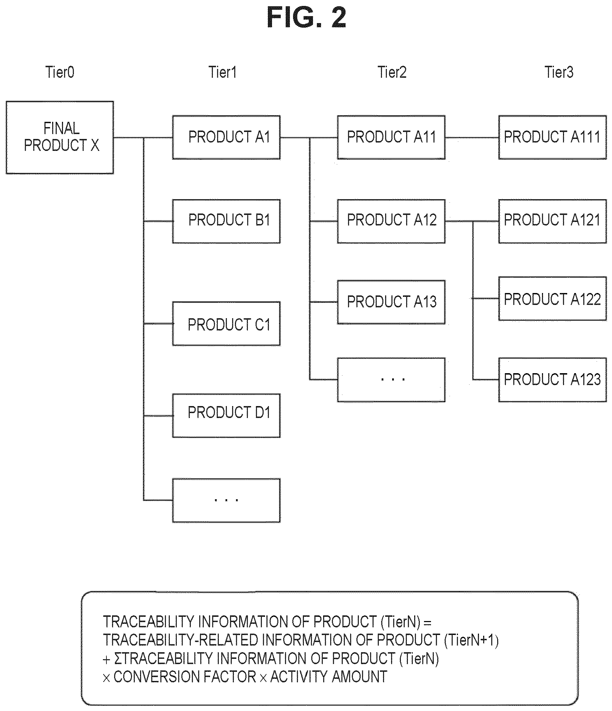

FIG. 2 is an example of a product tree. A product tree is a tree diagram that illustrates the relationships between products supplied by a supply chain. In the example illustrated in FIG. 2, the supply relationships of a plurality of products constituting a final product X are represented by the tree diagram. In the example illustrated in FIG. 2, the final product X is produced by assembling products A1, B1, C1, D1, .... A product A1 is produced by assembling products A11, A12, A13, .... In this way, the relationship between products that constitute the final product can be represented by a tree diagram in which each product is a node.

The server device 1 according to the first embodiment collects information (hereinafter referred to as product information) on products produced by each company and information for linking pieces of the product information with each other from a terminal (company terminal 2) corresponding to each company, and then the server device 1 generates a product tree based on these. Further, the product information includes information (for example, information on a greenhouse gas emission amount. Hereinafter referred to as traceability-related information) on traceability, and by tracing the product tree, it is possible to track carbon footprints, and the like.

More specifically, the server device 1 integrates traceability information on an upstream product used in manufacturing a predetermined product with traceability-related information on the predetermined product, and acquires traceability information on the predetermined product. Traceability information is information obtained by tracing the product tree from an upstream side to a downstream side. Traceability-related information is information that is measured or acquired in a process of manufacturing a company's products at the company.

For example, in the example illustrated in FIG. 2, a product A11 is manufactured using a product A111. Further, a product A1 is manufactured using the product A11. In this case, the traceability information on the product A11 is acquired by integrating the traceability-related information on the product A11 measured in a manufacturing process of the product A11 and the traceability information on the product A111 handed down from the product A111. The traceability information on the product A11 is further handed down by the downstream product, product A1, and is integrated with the traceability-related information on the product A1 measured in the manufacturing process of the product A1 and the traceability information on other downstream products of the product A1.

When a CFP value is acquired as traceability information, the CFP value of a product at TierN is expressed by the following Expression 1.

$$
\begin{aligned}
\text{CFP value of product N (TierN)} = {} & \text{Measured CFP value in company of TierN} \\
& + \Sigma_k \; (\; \text{CFP value of product k (TierN+1)} \\
& \qquad \times \text{Conversion factor Ck for product N (TierN)} \\
& \qquad \times \text{Activity amount Uk for product N (TierN)} \;) \\
& \qquad\qquad\qquad\qquad \cdots \text{(Expression 1)}
\end{aligned}
$$

k is a variable that indicates an upstream product. When a product N is a TierN product, and the product N is manufactured using a plurality of TierN+1 products N+1, the variable k takes a value from 1 to the number of products N+1 used to manufacture the product N. A conversion factor Ck for the product N is a conversion factor that converts the CFP value of the k-th product N+1 into the unit of the CFP value of the product N. An activity amount Uk for the product N is a usage amount of the k-th product N+1 per unit of production amount for the product N. For example, when one unit of the production amount of the product N is one, the activity amount Uk of the product N is the usage amount of the k-th product N+1 per one product N. For example, when one unit of the production amount of the product N is 1 kg, the activity amount Uk of the product N is the usage amount of the k-th product N+1 per 1 kg of the product N. A CFP value of the final product (most downstream product) can be acquired by sequentially executing the calculation of Expression 1 for each Tier product starting from the upstream product.

In Expression 1, the CFP value of the product N corresponds to traceability information on the product N. The measured CFP value in a TierN company corresponds to traceability-related information on the product N. The CFP value of the product k (TierN+1) corresponds to traceability information on the product k (TierN+1).

Next, when a recycling rate of the product N regarding a predetermined raw material is acquired as traceability information, it is acquired by dividing the usage amount of recycled material used until the manufacture of the product N by the total usage amount of the predetermined raw material used until the manufacture of the product N. The total usage amount of the predetermined raw material used until the manufacture of the product N indicates the total usage amount of the recycled material and non-recycled material of the predetermined raw material used until the manufacture of product N. Hereinafter, the total usage amount and recycling rate in the manufacturing process of the product N measured in TierN companies will be simply referred to as the total usage amount in product N manufacturing and the recycling rate in product N manufacturing. A usage amount of recycled material used for a predetermined raw material used until the manufacture of the product N is simply referred to as a recycled material usage amount up to the product N. A total usage amount of a predetermined raw material used up to the production of product N is simply referred to as the total usage amount up to product N. The recycling rate of the predetermined raw material used until the manufacture of the product N is simply referred to as the recycling rate of the product N. The recycling rate of the product N is expressed by the following Expression 2.

$$
\begin{aligned}
\text{Recycling rate of product N (TierN)} \\
= \text{ Recycled material usage amount up to product N} \div \text{Total usage amount up to product N} \\
= \{ \text{ Total usage amount in manufacturing product N} \times \text{recycling rate in manufacturing product N} \\
+ \sum_k ( \text{ Total usage amount up to product k (TierN+1)} \\
\times \text{ Recycling rate of product k (TierN+1)} \\
\times \text{ Conversion factor Ck for product N (TierN)} \\
\times \text{ Activity amount Uk for product N (TierN)} ) \} \\
\div \{ \text{ Total usage amount in manufacturing product N} \\
+ \sum_k ( \text{ Total usage amount up to product k (TierN+1)} \\
\times \text{ Conversion factor Ck for product N (TierN)} \\
\times \text{ Activity amount Uk for product N (TierN)} ) \} \\
\cdots \text{(Expression 2)}
\end{aligned}
$$

The units used for the total usage amount up to the product N+1 and the total usage amount in manufacturing the product N may be different between a TierN+1 company and a TierN company. Therefore, when the recycling rate of the product N is calculated, the conversion factor Ck for the product N is a conversion factor that converts the total usage amount up to the k-th product N+1 into the unit of the total usage amount for manufacturing the product N.

In Expression 2, the information handed down from the product N+1 of TierN+1 to the product N of TierN is the recycling rate of the product k (TierN+1) and the total usage amount up to the product k (TierN+1). Therefore, in Expression 2, the traceability information on the product k (TierN+1) corresponds to a set of the recycling rate of the product k (TierN+1) and the total usage amount up to the product k (TierN+1). Further, in Expression 3, the traceability-related information on the product N is a set of the total usage amount in manufacturing the product N and the recycling rate in manufacturing the product N, which are measured in a TierN company. In this case, the traceability information on the product N that is handed down from the TierN company to a further downstream TierN-1 company is a set of the recycling rate of the product N and the total usage amount up to the product N.

When determining the recycling rate of the product N, the following Expression 2-1, which is a modification of the above-described Expression 2, may be used.

Recycling rate of product N (TierN)

$=$ Recycled material usage amount up to product N $\div$ Total usage amount up to product N

$=$ { Recycled material usage amount in manufacturing product N

$+$ $\sum_k$ ( Recycled material usage amount up to product k (TierN+1)

$\times$ Conversion factor Ck to product N (TierN)

$\times$ Activity amount Uk for product N (TierN) ) }

$\div$ { Total usage amount in manufacturing product N

$+$ $\sum_k$ ( Total usage amount up to product k (TierN+1)

$\times$ Conversion factor Ck for product N (TierN)

$\times$ Activity amount Uk for product N (TierN) ) }

• • • (Expression 2-1)

When the recycling rate of the product N is determined using Expression 2-1, the information handed down from the product k of TierN+1 to the product N of TierN is the recycled material usage amount up to the product k (TierN+1) and the total usage amount up to the product k (TierN+1). Therefore, in Expression 3-1, the traceability information on the product k (TierN+1) is the recycled material usage amount up to the product k (TierN+1) and the total usage amount up to the product k (TierN+1). In Expression 3-1, the traceability-related information on the product N is a set of the recycled material usage amount and the total usage amount in manufacturing the product N.

When a score indicating a degree of fulfilling DD information of the product N is calculated according to a predetermined method, for example, regarding the usage amount of a predetermined raw material, which is one piece of the DD information, it is possible to convert the unit of the usage amount of the predetermined raw material in the product N handed down from TierN. In this case, the conversion factor Ck is a conversion factor that converts the unit of the usage amount of the predetermined raw material in the k-th product N+1 into the unit of the usage amount of the predetermined raw material included in the product N. A method of calculating the score indicating the degree of fulfilling DD information is not limited to a specific method. When a score indicating the degree of fulfilling DD information of the product N is calculated, the traceability-related information on the product N is, for example, DD information on the product N. When a score indicating the degree of fulfilling DD information of the product N is obtained, for example, the traceability information on the product N+1 is a score indicating the degree of fulfilling DD information for the product N+1 and a total value of DD information up to the product N+1. However, when a score indicating the degree of sufficiency of DD information for the product N is calculated, the definition of traceability-related information for the product N and traceability information for the product N+1 is not limited to the above, but may be defined according to the method of calculating the score.

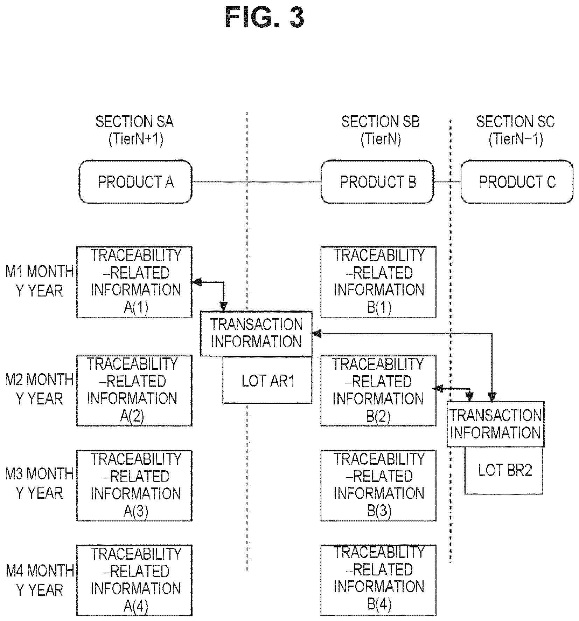

FIG. 3 is a diagram illustrating an example of linking transaction information according to the first embodiment. For example, a final product is manufactured by assembling products manufactured in a company or products manufactured by departments in a single company. Hereinafter, a company that manufactures products, a department in a company, a factory in a company, and the like will be collectively referred to as sections.

A section SA, a section SB, and a section SC are sections that manufacture products included in the product tree of a predetermined final product. The section SA manufactures a product A of TierN+1. The section SB manufactures a product B of TierN. The product B is manufactured using the product A. That is, the relationship between the product A and the product B is such that the product A is an upstream product and the product B is a downstream product.

For example, each section assumes that traceability information is measured monthly. Therefore, one product has a plurality of pieces of traceability-related information for each measurement month. For example, the traceability-related information of the product A measured in month M1 of year Y is traceability-related information A(1).

Further, for example, a lot is used as a unit for product shipping from each section. The number and quantity of products included in one lot varies by section and product. Further, even when the product is the same, the number or quantity of products to be shipped may differ depending on the lot. When shipping occurs multiple times during the measurement period of traceability-related information, for example, there are multiple shipments (lots) of the product A from the section SA in month M1 of year Y. In the example illustrated in FIG. 3, transaction information for one lot AR1, one of a plurality of lots of the product A shipped from the section SA to the section SB in month M1 of year Y, and transaction information for one lot BR2, one of a plurality of lots of the product B shipped from the section SB to the section SC in month M2 of year Y are shown.

As described in the example illustrated in FIG. 2, for example, the traceability information of the product B is obtained by integrating the traceability-related information of the product B and the traceability information of the upstream product A. However, for example, the product A that was shipped in month M1 of year Y is not necessarily used to manufacture the product B that was shipped in month M1 of year Y. Therefore, when trying to acquire traceability information for the product B with higher accuracy, for the product B to be shipped in month M1 of year Y, it is necessary to consider which product A was used, i.e., when was the used product A shipped, that is, the association between the upstream product and the downstream product on a lot-by-lot basis.

In the first embodiment, for each product, a lot-by-lot association between the product and an upstream product is acquired. In the example illustrated in FIG. 3, the lot BR2 of the product B is associated with the lot AR1 of the product A, which was used for the product B of the lot BR2. This makes it possible to specify that the product B of the lot BR2 was manufactured using the product A of the lot AR1. That is, when acquiring traceability information on the product B of the lot BR2, it can be specified that traceability information on the product A of the lot AR1 is to be used.

Next, regarding the product B, since traceability-related information exists for each month, in the first embodiment, for each product, an association between a lot and traceability-related information corresponding to the time when the product of the lot was manufactured is acquired. In the example illustrated in FIG. 3, the lot BR2 of the product B is associated with traceability-related information B(2). As a result, traceability-related information B(2) measured in month M2 of year Y can be specified as traceability-related information on the product B of the lot BR2.

In the first embodiment, when acquiring traceability information on a designated product of a designated lot, the server device 1 first specifies the lot of each product by tracing the association between upstream products and downstream products on a lot-by-lot basis for each product in order from the designated product in the designated lot to the upstream side. Next, the server device 1 repeatedly acquires traceability information on the product in the specified lot for each product in order from the most upstream product to the downstream side, thereby acquiring traceability information on the designated product in the designated lot. Information on the downstream product of the specified lot is acquired by acquiring traceability-related information on the downstream products of the specified lot from the association between the lot specified for the downstream product and traceability-related information, and integrating it with traceability information on the upstream product of the lot.

Device Configuration

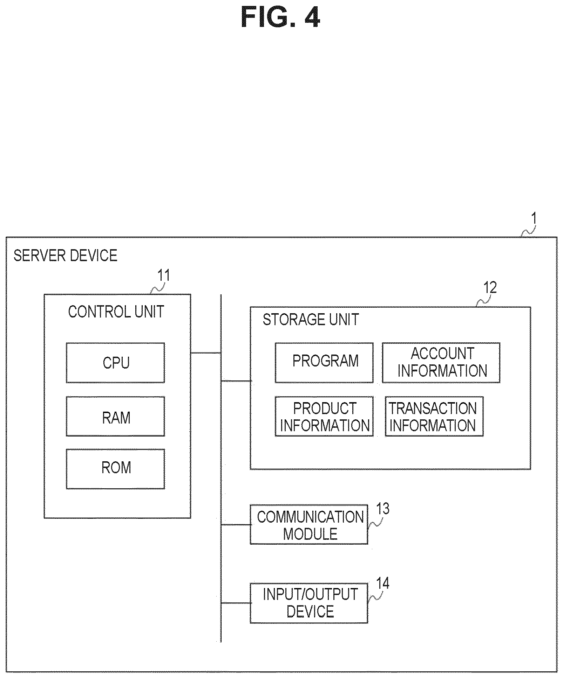

Next, the hardware configuration of each device constituting the system will be described. FIG. 4 is a diagram schematically illustrating an example of the hardware configuration of the server device 1 according to the first embodiment. The server device 1 is configured as a computer having a control unit 11, a storage unit 12, a communication module 13, and an input/output device 14.

The server device 1 can be configured as a computer having a processor (CPU, GPU, and the like), a main storage device (RAM, ROM, and the like), and an auxiliary storage device (EPROM, hard disk drive, removable media, and the like). The auxiliary storage device stores an operating system (OS), various programs, various tables, and the like, and by executing the programs stored therein, each function (software module) that meets a predetermined purpose, as will be described below, can be realized. However, some or all of the functions may be realized as a hardware module by a hardware circuit such as an ASIC or an FPGA.

The control unit 11 is an operation unit that realizes various functions of the server device 1 by executing a predetermined program. The control unit 11 can be realized by, for example, a hardware processor such as a CPU. Further, the control unit 11 may be configured to include a RAM, a read only memory (ROM), a cache memory, and the like.

The storage unit 12 is a medium that stores information, and is composed of a storage medium such as a RAM, a magnetic disk, or a flash memory. The storage unit 12 stores programs executed by the control unit 11, data used by the programs, and the like. Further, a database is constructed in the storage unit 12, and transaction information, product information, and account information on companies collected from a plurality of company terminals 2 are stored in the database. Details will be described below.

The communication module 13 is a communication interface used to connect the server device 1 to a network. The communication module 13 may be configured to include, for example, a network interface board, a wireless communication interface for wireless communication, and the like. The server device 1 can perform data communication with other computers (for example, each company terminal 2) via the communication module 13.

The input/output device 14 is a device that accepts input operations performed by an operator and presents information to the operator. Specifically, the input/output device 14 includes a device that performs input such as a mouse and a keyboard, and a device that performs output such as a display and a speaker. The input/output device may be integrally configured with, for example, a touch panel display.

In the specific hardware configuration of the server device 1, components can be omitted, replaced, or added as appropriate depending on the embodiment. For example, the control unit 11 may include a plurality of hardware processors. The hardware processor may be composed of a microprocessor, a FPGA, a GPU, or the like. The input/output device 14 may be omitted, or an input/output device (for example, an optical drive, and the like) other than the exemplified one may be added. Further, the server device 1 may be configured by a plurality of computers. In this case, the hardware configurations of the computers may or may not match.

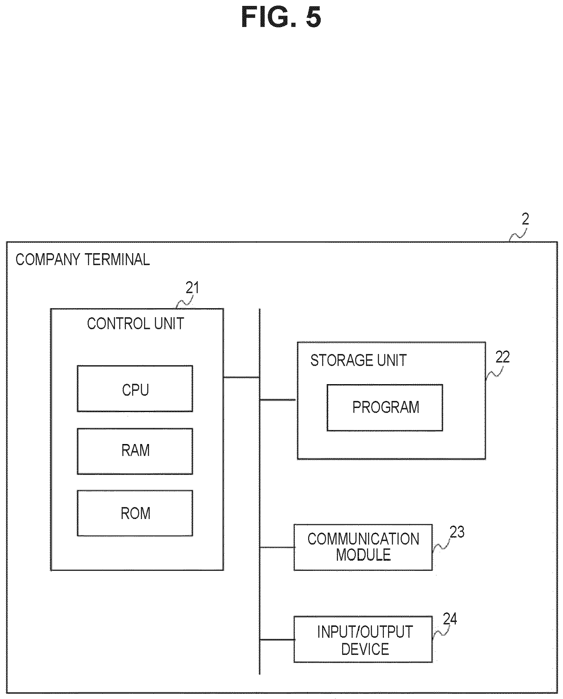

FIG. 5 is a diagram schematically illustrating an example of the hardware configuration of the company terminal 2 according to the first embodiment. The company terminal 2 is configured as a computer having a control unit 21, a storage unit 22, a communication module 23, and an input/output device 24.

Similarly to the server device 1, the company terminal 2 can be configured as a computer having a processor (CPU, GPU, and the like), a main storage device (RAM, ROM, and the like), and an auxiliary storage device (EPROM, hard disk drive, removable media, and the like). However, some or all of the functions (software modules) may be realized as hardware modules by, for example, hardware circuits such as ASICs or FPGAs.

The control unit 21 is an operation unit that realizes various functions (software modules) of the company terminal 2 by executing a predetermined program. The control unit 21 can be realized by, for example, a hardware processor such as a CPU. Further, the control unit 21 may be configured to include a RAM, a read only memory (ROM), a cache memory, and the like.

The storage unit 22 is a medium that stores information, and is constituted by a storage medium such as a RAM, a magnetic disk, or a flash memory. The storage unit 22 stores programs executed by the control unit 21, data used by the programs, and the like.

The communication module 23 is a communication interface used to connect the company terminal 2 to a network. The communication module 23 may be configured to include, for example, a network interface board, a wireless communication interface for wireless communication. The company terminal 2 can perform data communication with other computers (for example, the server device 1) via the communication module 23.

The input/output device 24 is a device that accepts input operations performed by an operator and presents information to the operator. Specifically, the input/output device 24 includes a device that performs input such as a mouse and a keyboard, and a device that performs output such as a display and a speaker. The input/output device may be integrally configured with, for example, a touch panel display.

In the specific hardware configuration of the company terminal 2, similarly to the server device 1, components can be omitted, replaced, or added as appropriate depending on the embodiment.

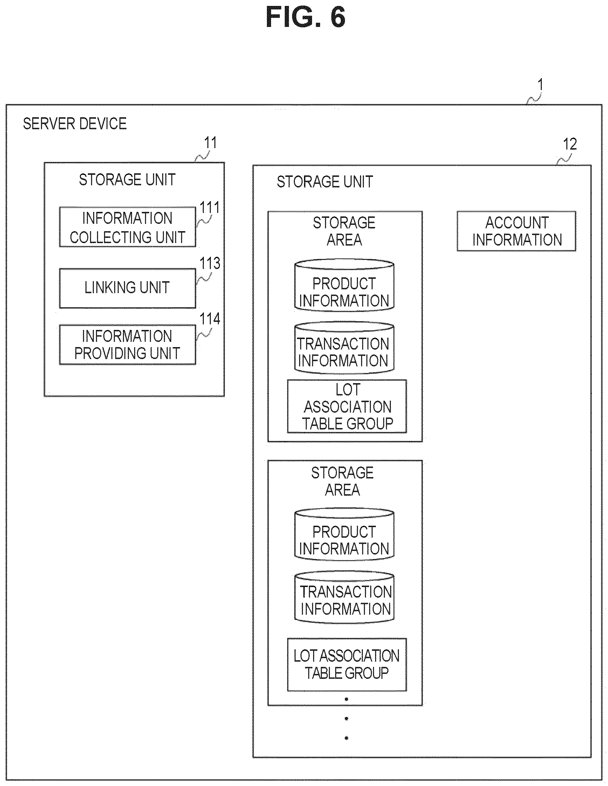

Next, the software configuration of each device constituting the system will be described. FIG. 6 is a diagram schematically illustrating the software configuration of the server device 1 according to the first embodiment. In the first embodiment, the control unit 11 is configured to include three software modules: an information collecting unit 111, a linking unit 113, and an information providing unit 114. Each software module may be realized by executing a program stored in the storage unit 12 by the control unit 11 (CPU). The information processing executed by the information collecting unit 111, the linking unit 113, and the information providing unit 114 described below is synonymous with the information processing executed by the control unit 11.

The information collecting unit 111 receives transaction information and product information transmitted from the company terminal 2 and stores the transaction information and product information in the storage unit 12. Further, in the first embodiment, the information collecting unit 111 receives, from the company terminal 2, the lot association between the upstream product and the product (downstream product) of the company corresponding to the company terminal 2, and the association between the product and traceability-related information, and then the information collecting unit 111 stores these associations in the storage unit 12.

The linking unit 113 is configured to acquire information for linking pieces of product information from the company terminal 2 by interacting with the company terminal 2. Further, the linking unit 113 is configured to execute processing of writing information representing a linking relationship to the product information stored in the storage unit 12 based on the acquired information. Further, the linking unit 113 is configured to receive a request to grant termination information, and in response to the request, execute processing to grant termination information to the product information stored in the storage unit 12. A product tree is formed by reflecting the linking and granting termination. That is, forming the product tree is configured by storing linking information and termination information in the storage unit 12. The linking unit 113 is configured to generate a product tree depending on the results of linking and granting termination.

The information providing unit 114 is configured to execute information processing related to the product tree and output the results of the information processing. The information processing related to the product tree may include processing for performing traceability-related calculations on the product tree. Outputting the results of the information processing may include processing of providing the company terminal 2 with information on the generated product tree. In one example, the information providing unit 114 generates information on a product tree, and calculates traceability information on the product based on the generated product tree.

In the first embodiment, the storage unit 12 is configured to include a plurality of logical storage areas. Different access authorities can be set for each of the storage areas, such as an area in which access authority is granted to a company CA, an area in which access authority is granted to the company CB, and the like. By storing the transaction information, product information, the lot association between the upstream product and the product (downstream product) of the company corresponding to the company terminal 2, and the association between the product and the traceability-related information, that are received from the company terminal 2, in the storage area corresponding to the company, the information collecting unit 111 sets the access authority and ensures security.

Hereinafter, a table that maintains the lot association between the upstream product and the products (downstream product) of the company corresponding to the company terminal 2 will be referred to as a transaction information correspondence table. A table that maintains the association between the product and the traceability-related information is referred to as a traceability-related information correspondence table. The transaction information correspondence table and the traceability-related information correspondence table are collectively referred to as a lot linking table group.

Additionally, account information is stored in the storage unit 12. In the first embodiment, interaction between the server device 1 and the company terminal 2 is performed by an operator of each company logging into the server device 1 via the company terminal 2 using an account of the corresponding company. Account information is information on accounts corresponding to each company constituting the supply chain. Logging in using an account is an example of accessing the server device 1 as a corresponding company. However, the method of accessing the server device 1 may not be limited to this example, and may be selected as appropriate depending on the embodiment.

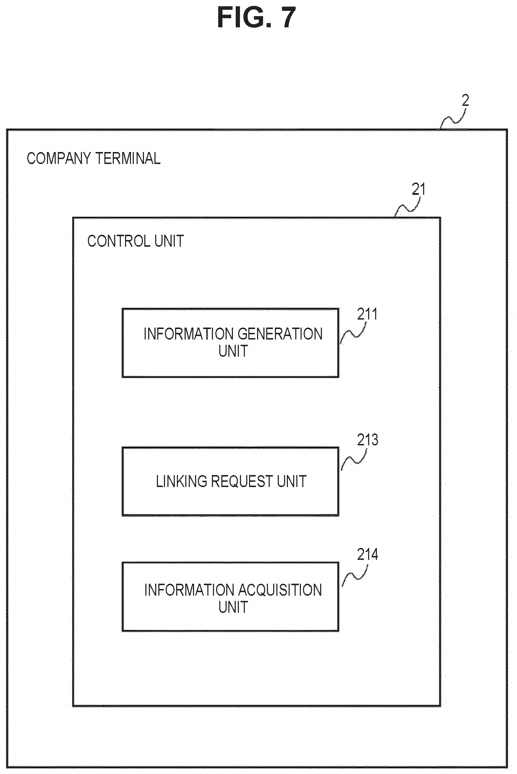

FIG. 7 is a diagram schematically illustrating the software configuration of the company terminal 2 according to the first embodiment. In the first embodiment, the control unit 21 is configured to include three software modules: an information generation unit 211, a linking request unit 213, and an information acquisition unit 214. Each software module may be realized by executing a program stored in the storage unit 22 by the control unit 21 (CPU). The information processing executed by the information generation unit 211, the linking request unit 213, and the information acquisition unit 214 described below is synonymous with the information processing executed by the control unit 21.

The information generation unit 211 generates information (transaction information and product information) on the product of the company corresponding to the company terminal 2 and transmits it to the server device 1. Further, a lot association between the upstream product and the product (downstream product) of the company corresponding to the company terminal 2 and an association between the product and traceability-related information are generated and transmitted to the server device 1. The lot association between the upstream product and the product (downstream product) of the company corresponding to the company terminal 2, and the association between the product and the traceability-related information are hereinafter referred to as lot association information. The lot association information is inputted, for example, through a lot association setting screen, which will be described below.

The linking request unit 213 transmits, to the server device 1, a request to link the company's own product information transmitted to the server device 1 with an upstream product. Along with the request, the identifier of the company's own product (downstream product) that is a linking source and the identifier of the upstream product that is a linking target are also transmitted to the server device 1 as a pair. The server device 1 can link pieces of product information to each other in accordance with this. Information on the downstream product that is the linking source and the upstream product that is the linking target may, for example, be input by a user operation through a linking target setting screen.

The information acquisition unit 214 transmits a request that provides a product tree and traceability information of a designated product to the server device 1, and outputs the information received from the server device 1.

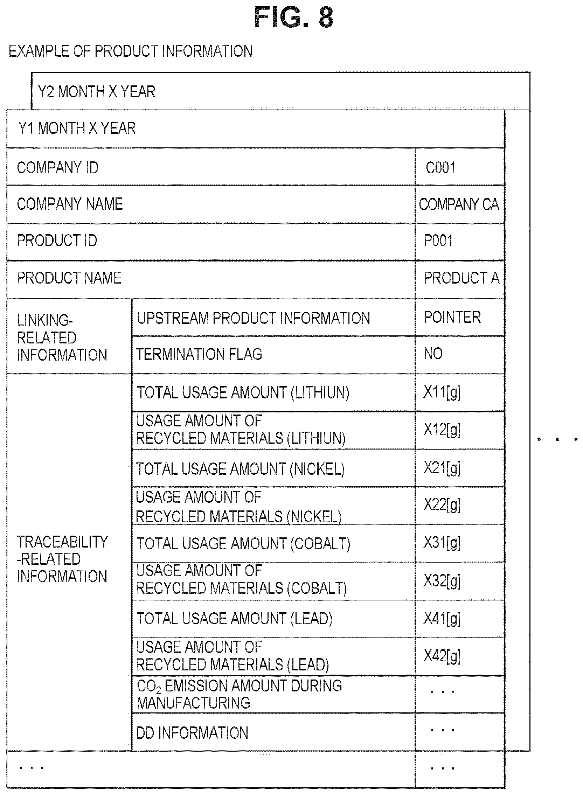

FIG. 8 is an example of product information. Product information may be received from the company terminal 2 or may be input via the operator of the server device 1. In the example illustrated in FIG. 8, the product information includes the fields of company ID, company name, product ID, and product name. The field of the company ID stores the identifier of the company that produces the target product. The field of the company name stores the name of the company that produces the target product. The field of the product ID stores the identifier of the target product. The field of the product name stores the name of the target product.

Further, the product information is configured to include linking-related information. The linking-related information is information for identifying the upstream product linked to the target product. In the first embodiment, the linking-related information includes the fields of "upstream product information" and "termination flag".

The upstream product information field is a field in which information for identifying product information corresponding to an upstream product (in other words, a product that is necessary to produce the target product and is included in the target product) linked to the target product is stored. That is, the field of upstream product information functions as an indicator indicating the upstream product linked with the target product.

The field of the termination flag is a field that stores a flag indicating whether the target product is a leaf node, that is, a node located at the most upstream terminal in the product tree. For example, when the value of the field of the termination flag is "1", that indicates that the target product is a node located at the terminal in the product tree. For example, when the value of the field of the termination flag is "0", that indicates that the target product is a node located at the terminal in the product tree.

When a value is stored in the field of upstream product information, the field of the termination flag becomes "0". On the other hand, when the field of the termination flag is "1", the field of the upstream product information is empty. The values of the fields of the upstream product information and the termination flag are received from the company terminal 2 or input by the operator of the server device 1, for example. When the target product is manufactured using a plurality of upstream products, the product information on the target product includes linking-related information for each upstream product.

The information providing unit 114 specifies the upstream product from linking-related information included in the product information about the final product, and then by tracing the linking-related information such as specifying the next upstream product by referring to the linking relationships included in the product information about the upstream product, the information providing unit 114 generates a product tree for the final product. In this case, the information providing unit 114 determines that the product tree ends with the product when the termination flag is "1".

Further, the product information is configured to include traceability-related information. In one example, traceability-related information may include a usage amount of materials (for example, upstream products) per production volume of a product, information on the recycling rate of predetermined raw materials used in the manufacturing process of the products in the company, an emission amount of greenhouse gas emitted during the production of the product, due diligence information, or a combination thereof. The predetermined raw material may be, for example, lithium, nickel, cobalt, lead, graphite, or the like. The recycling rate may be expressed directly or indirectly, such as by a combination of the total usage amount and the usage amount of recycled materials. Due diligence information (DD information) may be a technical document demonstrating that the amount of raw material contained in the product, the smelter, and the like, that a company is meeting its "responsible mineral sourcing obligations" regarding the product containing the target raw material (for example, cobalt, natural graphite, lithium, nickel, or the like). The DD information as one piece of the traceability-related information may be a score (percentage, ratio, or the like) indicating the degree to which the above obligation is fulfilled. These values are values measured at the corresponding company and correspond to the process of producing the target product.

For example, in the example illustrated in FIG. 8, the total usage amounts of lithium, nickel, cobalt, and lead used in the manufacturing process of a product A, the recycled material usage amounts, the amounts of greenhouse gases emitted in the production activities of the product A, due diligence information (DD information) on the product A, and the like are stored in the traceability-related information included in product information AI. The traceability-related information included in the product information AI does not include information (for example, the amount of greenhouse gases emitted until an upstream product B is produced) on the process until an upstream product is produced.

The traceability-related information may be selected as appropriate depending on the embodiment. In one example, the greenhouse gas emission amounts (carbon footprint) may include Scope 1, Scope 2, and Scope 3 emission amounts. Scope 1 may be direct greenhouse gas emission amounts. Scope 2 may be indirect emission amounts associated with the use of electricity, heat and steam supplied by other companies. Scope 3 may be indirect emission amounts other than Scope 1 and Scope 2.

In the first embodiment, traceability-related information is stored as a part of product information, so product information on a predetermined product exists for each measurement of traceability-related information. For example, when traceability-related information is measured monthly, product information on a predetermined product will exist for each month. The traceability-related information may be kept independently of product information.

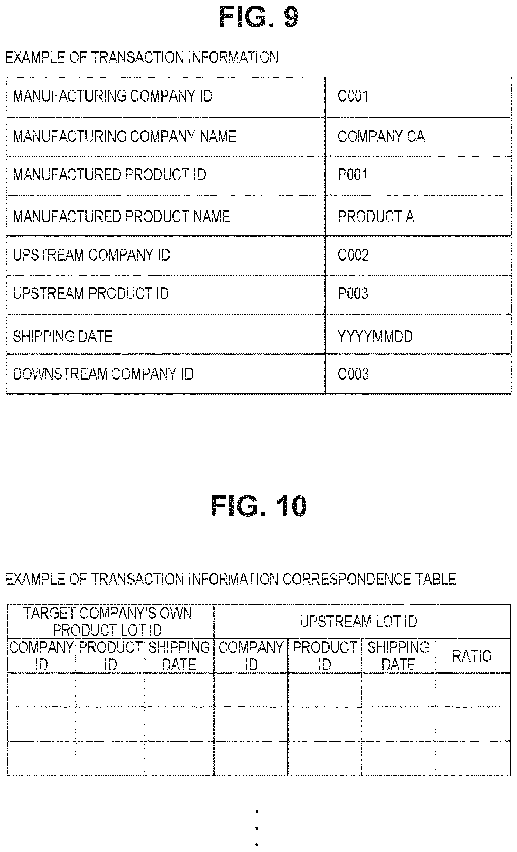

FIG. 9 is an example of transaction information. The transaction information may be received from the company terminal 2 or input via the operator of the server device 1. In the example illustrated in FIG. 9, the transaction information includes the fields of a manufacturing company ID, a manufacturing company name, a manufactured product ID, a manufactured product name, an upstream company ID, an upstream product ID, a shipping date, and a downstream company ID. The field of the manufacturing company ID stores the identifier of the company that manufactures the target product. The field of the manufacturing company name stores the name of the company that manufactures the target product. The field of the manufactured product ID stores the identifier of the target product. The field of the manufactured product name stores the name of the target product.

The upstream company ID stores the identifier of the company that supplies upstream products for the target product, that is, raw materials or parts of the target product. The upstream product ID stores the identifier of the upstream product for the target product. When a target product has a plurality of upstream products, the set of fields for upstream company ID and upstream product ID is included as many times as the number of upstream products of the target product.

The field of the shipping date stores the date on which the target product is shipped from the manufacturing company. The field of the downstream company ID stores the identifier of the company to which the target product is delivered. The information included in the transaction information is not limited to the example illustrated in FIG. 9. For example, the transaction information may include a manufacturing department ID indicating the department of the target product.

FIG. 10 is an example of a transaction information correspondence table. The transaction information correspondence table is a table that maintains the association between the lot of the product manufactured by the company and the lot of the upstream product corresponding to the product. In the example illustrated in FIG. 10, the transaction information correspondence table includes fields for the lot ID of the company's own target product and the lot ID of the upstream product corresponding to the product.

In the example shown in FIG. 10, the manufacturing company ID, manufacturing product ID, and shipping date included in the transaction information (FIG. 9) are used as product lot identification information. Therefore, in FIG. 10, the fields of the lot ID of the company's own target product and the lot ID of the upstream product corresponding to the product respectively include subfields of a company ID, a product ID, and a shipping date.

The subfield of the company ID stores the identifier of the company that manufactures the corresponding product. The subfield of the product ID stores the identifier of the corresponding product. The subfield of the shipping date stores a date indicating the shipping date of the corresponding product from the manufacturing company.

The field of the upstream product lot ID may further include the subfield of a ratio. The subfield of the ratio includes the ratio at which the upstream product is used in the company's own target product. For example, in the manufacture of a company's own target product, when there is only one supplier for the upstream product, the value in the field of the ratio will be 100%. For example, in manufacturing a company's own target product, when there are a plurality of suppliers for the upstream products, a record of the transaction information correspondence table is created for each supplier, and the value in the field of each ratio is calculated based on the ratio of raw materials or parts purchased from each supplier.

Each company holds not only transaction information on the shipping of their company's own products, but also transaction information on warehousing of the products purchased by their company. The transaction information on the warehousing of the products purchased by the company is transaction information on shipping of the products from the manufacturing company of the products. The manufacturing company ID, product ID, and shipping date of the upstream product illustrated in FIG. 10 are acquired from transaction information on shipping of the upstream product.

The information included in the transaction information correspondence table illustrated in FIG. 10 is an example, and the information is not limited thereto. For example, when each company assigns identification information to transaction information, the identification information assigned to each piece of transaction information may be used as the identification information of the product lot. Further, in addition to the company ID field, a department ID field storing the identifier of the manufacturing department may be included.

Further, the method of maintaining the association between the lot of the company's own product and the lot of the upstream product corresponding to the product is not limited to maintaining it as a transaction information correspondence table. For example, by including the identification information of the lot of the upstream product in the transaction information on the shipping of the company's own product, the association between the lot of the company's own product and the lot of the upstream product corresponding to the product may be maintained.

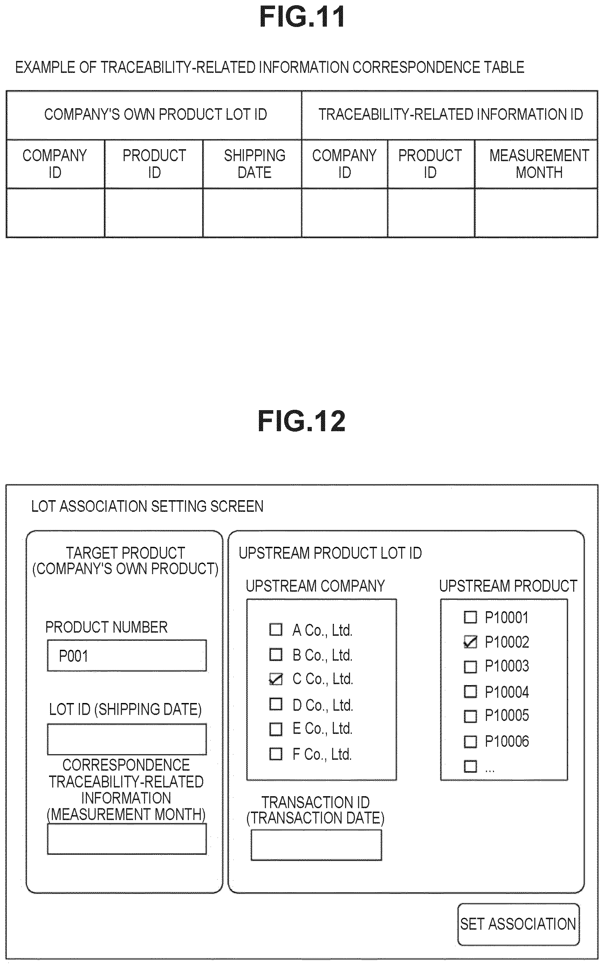

FIG. 11 is an example of a traceability-related information correspondence table. The traceability-related information correspondence table is a table that maintains associations between the lot of the product and traceability-related information corresponding to the product. In the example illustrated in FIG. 11, the traceability-related information correspondence table includes fields for the lot ID of the company's own target product and the traceability-related information ID corresponding to the product.

In the example illustrated in FIG. 11, similar to the example illustrated in FIG. 10, the manufacturing company ID, manufactured product ID, and shipping date included in the transaction information (FIG. 9) are used as product lot identification information. Therefore, in FIG. 11, the fields of the lot ID of the company's own product include subfields of the company ID, product ID, and shipping date.

In the example illustrated in FIG. 11, the company ID, product ID, and measurement month included in the product information on the company's own target product (FIG. 8) are used as the identification information of the traceability-related information. Therefore, in FIG. 11, the fields of traceability-related information include subfields of the company ID, product ID, and measurement month.

The information included in the traceability-related information correspondence table illustrated in FIG. 11 is an example, and the information is not limited thereto. For example, when identification information is assigned to traceability-related information (or product information), the identification information assigned to each piece of traceability-related information may be used as the identification information for the traceability-related information. Further, in addition to the company ID field, a department ID field storing the identifier of the manufacturing department may be included.

Further, the method of maintaining the association between the lot of the company's own product and the traceability-related information corresponding to the product is not limited to maintaining it as a table. For example, by including the identification information of the corresponding traceability-related information in the transaction information on the shipping of the company's own product, the association between the lot of the company's own product and the traceability-related information corresponding to the product may be held. Alternatively, by including identification information of transaction information related to the corresponding shipping of the company's own product in the product information (traceability-related information) regarding the company's own product, the association between the lot of the company's own product and the traceability-related information corresponding to the product may be held.

In addition, the association between the lot of the company's own product and the lot of the upstream product corresponding to the product and the association between the lot of the company's own product and the traceability-related information corresponding to the product is not limited to being maintained in separate tables as illustrated in FIGS. 10 and 11, but may be maintained in one table. The association between the lot of the company's own product and the lot of the upstream product corresponding to the product is an example of a "first association". The association between the lot of the company's own product and the traceability-related information corresponding to the product is an example of a "second association".

FIG. 12 is an example of the lot association setting screen of the company terminal 2. The lot association setting screen illustrated in FIG. 12 is based on the premise that the company identifier, product identifier, and shipping date are used as product lot identification information, as in FIGS. 10 and 11. Further, it is assumed that a company identifier, product identifier, and measurement month are used as identification information for traceability-related information.

The lot association setting screen illustrated in FIG. 12 includes fields for inputting information on the target product among the products manufactured by the company corresponding to the company terminal 2 and information on the upstream product of the target product. The input field for information on the target product includes input fields for the product number of the target product, identification information for the target lot of the target product, and identification information for traceability-related information corresponding to the target lot.

In the example illustrated in FIG. 12, the date on which the target product of the target lot was shipped from the company corresponding to the company terminal 2 is input into the input field for the identification information of the target lot of the target product. In the input field for the identification information of the traceability-related information corresponding to the target lot, the month in which the traceability-related information on the target product of the target lot was measured is input. Drop-down lists may be arranged in the input fields for the product number of the target product, the identification information of the target lot of the target product, and the identification information of the traceability-related information corresponding to the target lot, and a value selected from the drop-down list may be input.

The input field for information on the upstream product of the target product includes input fields for an upstream company list of upstream products associated with the target product, a list of upstream products, and the date of shipment of the upstream products from the upstream companies.

The list of upstream companies includes, for example, companies that have business records on transactions with the company (downstream company) corresponding to the company terminal 2 in the past. When an upstream company is selected in the list of upstream companies, a list of, among products of the selected upstream company, the products, for which there are business records on a transaction with the company corresponding to the company terminal 2 in the past, is displayed as a list of upstream products.

When a user operation to select the association setting button is performed, the request for registration of lot association information, the product number of the target company's product, the shipping date of the company's product, the measurement month of the traceability-related information, the identifier of the upstream company, the identifier of the upstream product, and the shipping date of the upstream product are input into the information generation unit 211. In response, the information generation unit 211 transmits a registration request for lot association information and the lot association information to the server device 1. In addition, the lot association information includes the association between the identifier of the company corresponding to the company terminal 2, the identifier of the target product, and the shipping date of the target product, as the identification information of the lot of the product of the company corresponding to the company terminal 2, and the upstream company identifier, the upstream product identifier, and the shipping date of the upstream product, as the identification information of the lot of the upstream product, and the association between the identifier of the company corresponding to the company terminal 2, the identifier of the target product, and the shipping date of the target product, as the identification information of the lot of the product of the company corresponding to the company terminal 2, and the identifier of the company corresponding to the company terminal 2, the identifier of the target product, and the measurement month of the traceability-related information, as the identification information of the traceability-related information. The lot association setting screen illustrated in FIG. 11 is an example, and is not limited to the example illustrated in FIG. 11.

Processing Flow

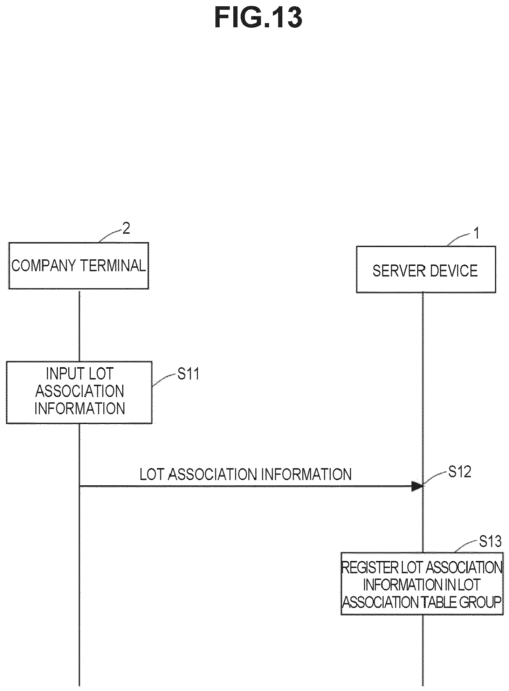

FIG. 13 is a diagram illustrating an example of a processing sequence between the server device 1 and the company terminal 2 regarding the registration of the lot association information. In FIG. 13, an example will be described in which the association between the lot BR2 of the product B manufactured in the section SB and the lot AR1 of the upstream product A of the product B, and the association between the lot BR2 of the product B and traceability information B(2) corresponding to the product B of the lot BR2 are registered to the server device 1 from the company terminal 2 corresponding to the section SB in FIG. 3.

In S11, the information generation unit 211 of the company terminal 2 corresponding to the section SB receives input of lot association information from the lot association setting screen. The lot association information includes, for example, as part of the identification information of the lot of the product B, the identifier of the product B and the shipping date of the product B, as the identification information of the lot of the product A, the identifier of the section SA, the identifier of the product A, and the shipping date of the product A, and as part of the identification information of the traceability-related information of the product B, the identifier of the product B and the measurement month of the traceability-related information.

In S12, the information generation unit 211 of the company terminal 2 corresponding to the section SB transmits a registration request for lot association information and the lot association information to the server device 1. In addition to the information input through the lot association setting screen in S11, the lot association information in this case also includes the identifier of the section SA as part of the identification information of the lot of the product B and part of the identification information of the traceability-related information of the product B.

In S13, the information collecting unit 111 of the server device 1 receives the registration request for the lot association information and the lot association information from the company terminal 2, and registers the lot association information in a lot correspondence table group corresponding to the section SB. More specifically, in the first embodiment, the information collecting unit 111 of the server device 1 stores, in a transaction information correspondence table corresponding to the section SB, the association between the identification information of the section SB, the identifier of the product B, and the shipping date of the product B, as the identification information of the lot of the product B, and the identifier of the section SA, the identifier of the product A, and the shipping date of the product A, as the identification information of the lot of the product A. The information collecting unit 111 of the server device 1 stores, to a traceability-related information correspondence table corresponding to the section SB, the association between the identification information of the section SB, the identifier of the product B, and the shipping date of the product B, as the identification information of the lot of the product B, and the identifier of the section SB, the identifier of the product B, and the measurement month of the traceability-related information, as the identification information of the traceability-related information,.

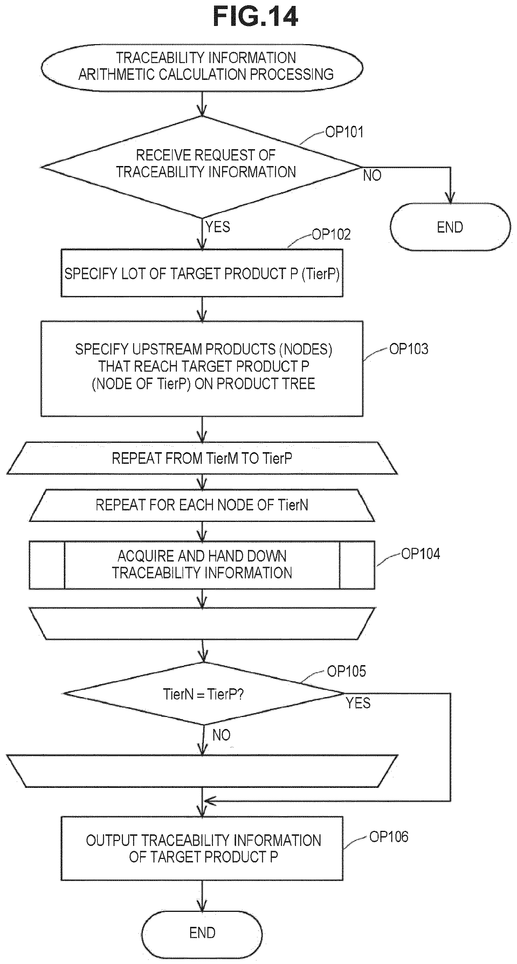

FIG. 14 is an example of a flowchart of traceability information calculation processing by the server device 1. The processing illustrated in FIG. 14 is repeatedly executed at a predetermined cycle, for example. The control unit 11 of the server device 1 is the execution entity of the processing illustrated in FIG. 14, but for convenience, the processing is described with the functional components as the entity. As a premise of the processing illustrated in FIG. 14, it is assumed that a product tree with a predetermined product as the final product is generated and displayed on the company terminal 2 in response to a request from the company terminal 2, for example. Further, in FIG. 14, the traceability information as the acquisition target is described without specifying which one of, for example, a CFP value, a recycling rate, and a score indicating the degree of fulfilling DD information it is. The traceability information as the acquisition target may be a plurality of ones from among the CFP value, the recycling rate, and the score indicating the degree of fulfilling the DD information.

In OP101, the information providing unit 114 determines whether a traceability information acquisition request has been received from the company terminal 2. For example, in the company terminal 2, when any of the products in the displayed product tree is selected by a user operation on the company terminal 2, the traceability information acquisition request is transmitted from the information acquisition unit 214 of the company terminal 2. For example, an identifier of a product of a traceability information acquisition target is also received along with the traceability information acquisition request. The product of the traceability information acquisition target will be set as a product P.

When the traceability information acquisition request is received from the company terminal 2 (OP101: YES), the process proceeds to OP102. When the traceability information acquisition request is not received from the company terminal 2 (OP101: NO), the process illustrated in FIG. 14 ends.

In OP102, the information providing unit 114 specifies the lot of the product P as the traceability information acquisition target. For example, when there is a lot designated by the user, the designated lot may be acquired as the lot of the traceability information acquisition target. The user's designation of the lot may be acquired, for example, by receiving user-designated lot identification information together with the traceability information acquisition request. When there is no user-designated lot, for example, the most recent lot or a lot that is a predetermined number of lots from the most recent lot may be specified as the lot of the traceability information acquisition target.

In OP103, the information providing unit 114 specifies a node corresponding to an upstream product that reaches the node corresponding to the target product P in a Tier upstream from the node corresponding to the target product P on the product tree, and specifies products to be the target of the following processing. The Tier where the node corresponding to the target product P is located will be set as a TierP. It is assumed that the nodes specified in OP103 include the node corresponding to the target product P. For example, when the target product P is the final product, all nodes on the product tree are specified in OP103.

Next, in OP104, processing of acquiring and handing down the traceability information on the corresponding product n is executed on a node n of a TierN in the product tree. Details of the processing of OP104 will be described below. The node n of the TierN indicates a node as a target of the processing of OP104. Further, the node n of the TierN is the node specified in OP103.

The processing of OP104 is executed for each node specified in OP103 among the nodes in each Tier from the most upstream TierM to the TierP in the product tree. Specifically, first, the processing of OP104 is executed, in order, for each node specified in OP102 in the TierM. When this is finished, the processing of OP104 is then executed, in order, for each node specified in OP103 in TierM-1. In this way, the processing of OP104 is repeatedly executed until it has been executed for all nodes specified in OP 103 in the TierP.

In OP105, the information providing unit 114 determines whether the TierN is the TierP, that is, whether a node corresponding to the target product P is located in the TierN, which is currently the execution target of the processing in OP104.

When the TierN is not the TierP (OP105: NO), the information providing unit 114 sets TierN-1 as a new TierN and executes the processing of OP104 for each node specified in OP103 in the TierN.

When the TierN is the TierP (OP105: YES), the processing proceeds to OP106. When TierN is TierP, the traceability information on the target product P has been acquired by repeating the processing of OP104 for all the nodes specified in OP103 in the TierN, so in OP106, the information providing unit 114 transmits the traceability information on the target product P to the company terminal 2. Then, the processing illustrated in FIG. 14 ends.

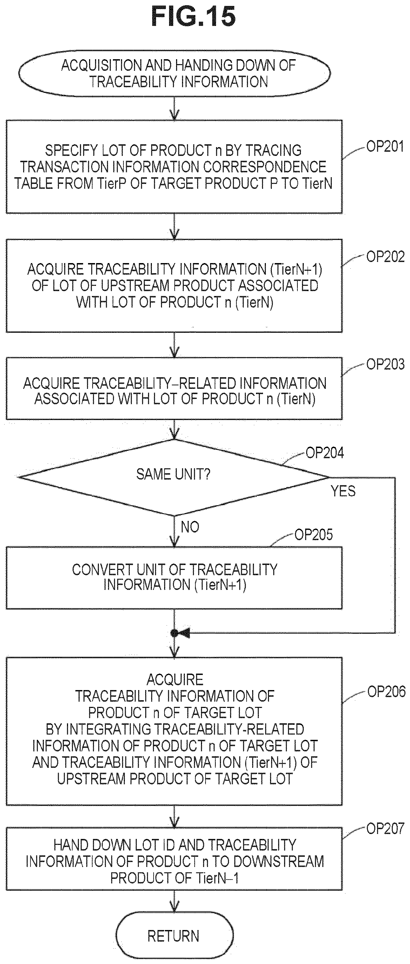

FIG. 15 is an example of a flowchart of the processing of acquiring and handing down traceability information on a predetermined product. The processing illustrated in FIG. 15 is the processing executed in OP104 of FIG. 14. In the processing illustrated in FIG. 15, it is assumed that a Tier as the target of the processing is set as a TierN, a node as the target of the processing is set as a node n, and a product corresponding to the node n is set as a product n.

In OP201, the information providing unit 114 specifies a lot for which traceability information is to be acquired for the product n. The lot for which traceability information is to be acquired for the product n is acquired by tracing the transaction information correspondence table of the section that manufactures the product corresponding to each node on the product tree from the node P (TierP) corresponding to the target product P toward the upstream side to the node n corresponding to the product n of the TierN.

In OP202, the information providing unit 114 refers to the transaction information correspondence table corresponding to the section n that manufactures the product n, and specifies the lot of the upstream product corresponding to the lot of the product n specified in OP201 to acquire traceability information on the upstream product of the specified lot. The traceability information on the upstream product at TierN+1 has already been acquired before the processing of FIG. 15 is executed for the product n, and it is stored in a predetermined storage area for which the access authority is granted to the company corresponding to the section n. When the product n is the most upstream product, traceability information on the upstream product is not acquired in OP202.

In OP203, the information providing unit 114 refers to the traceability-related information correspondence table corresponding to the section n that manufactures the product n, and acquires the traceability-related information corresponding to the lot of the product n specified in OP201. Traceability-related information on the product n is acquired from a storage area dedicated to the company corresponding to the section n.

In OP204, the information providing unit 114 determines whether the value obtained from the traceability information on the upstream product and the value obtained from the traceability-related information on the product n are in the same unit. When the unit of the value obtained from the traceability information on the upstream product and the unit of the value obtained from the traceability-related information on the product n are the same (OP204: YES), the processing proceeds to OP206. When the unit of the value obtained from the traceability information on the upstream product and the unit of the value obtained from the traceability-related information on product n are different (OP204: NO), the processing proceeds to OP205.

In OP205, the information providing unit 114 converts the value obtained from the traceability information on the upstream product acquired in OP202, using a predetermined conversion factor, into a value indicated by the unit used for the value obtained from the traceability-related information on the product n. When there are a plurality of upstream products at TierN+1 used to manufacture the product n, the processing of OP202, OP204, and OP205 is executed for each of the products. When the product n is the most upstream product, the processing in OP204 and OP205 is not executed.

In OP206, the information providing unit 114 integrates the traceability-related information on the product n of the lot specified in OP201 with the traceability information on the upstream product of the lot associated with the lot, and acquires the traceability information on the product n of the lot specified in OP201. The integration of the traceability-related information on the product n and the traceability information on the upstream product is as described in FIG. 2. When the product n is the most upstream product, the traceability-related information of the product n acquired in OP203 becomes the traceability information of the product n as is.

In OP207, the information providing unit 114 hands down the identification information of the lot specified in OP201 and the traceability information on the product n of the lot to the downstream product in TierN-1 for the product n. The handing-down of the traceability information on the product n in OP207 may be performed by storing traceability information on the product n in a storage area shared by a company that manufactures the product n and a company that manufactures a downstream product in TierM-1 for the product n, or may be performed by storing it in a storage area exclusively allocated to a company that manufactures a downstream product in TierM-1 for the product n. When it is stored in a storage area exclusively allocated to a company that manufactures a downstream product in TierM-1 for the product n, it is assumed that the account of the company that manufactures the product n is given write authority to the storage area exclusively allocated to the company that manufactures the downstream product in TierM-1.

When the processing of OP207 is completed for the node n, the processing illustrated in FIG. 15 is executed using another node in TierN among the nodes specified in OP103 of FIG. 14 as the target node n. When the processing illustrated in FIG. 15 is executed for all the nodes specified in OP103 of FIG. 14 in TierN, the processing proceeds to OP105 of FIG. 14. The processing illustrated in FIGS. 14 and 15 is only an example, and the processing executed by the server device 1 can be changed as appropriate depending on the embodiment.

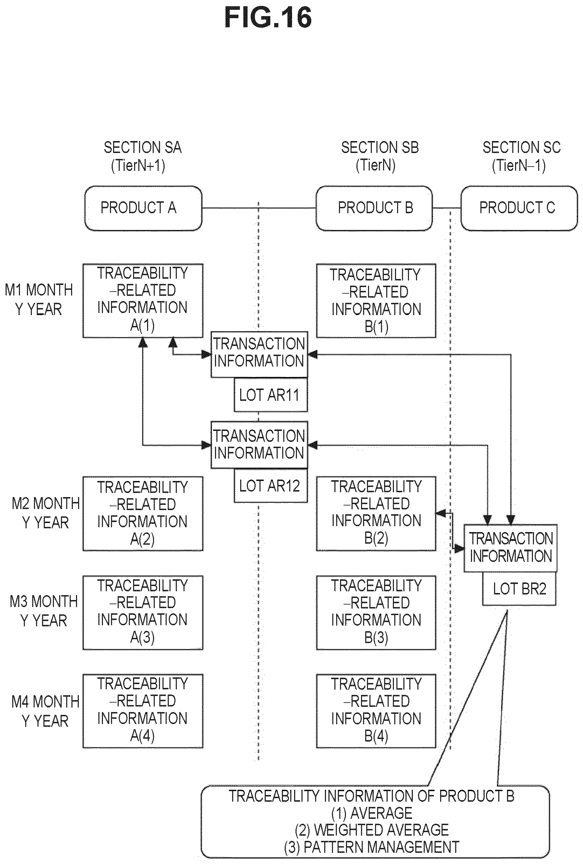

FIG. 16 is a diagram illustrating acquisition of traceability information when there is a plurality of lots of upstream products. The premise of the example illustrated in FIG. 16 is the same as the example illustrated in FIG. 3. In the example illustrated in FIG. 16, there is a plurality of lots of the product A used for the product B of the lot BR2. When there is a plurality of lots of upstream products for a predetermined lot of a predetermined product, there is also the same amount of traceability information for the upstream products as the number of lots, which is used to acquire traceability information for the predetermined product. As for a method that acquires traceability information on a predetermined product by integrating a plurality of pieces of traceability information on upstream products corresponding to each of a plurality of lots with traceability-related information on the predetermined product, one of the following methods (1) to (3) is adopted.

(1) An average value of a plurality of values obtained from traceability information on upstream products corresponding to each of a plurality of lots is used to integrate traceability-related information on a predetermined product.
(2) A weighted average value of a plurality of values obtained from traceability information on upstream products corresponding to each of a plurality of lots is used to integrate traceability-related information on a predetermined product. The weight may be a value according to the usage ratio of each upstream product of a plurality of lots, for example, or may be acquired according to other rules.
(3) Each piece of traceability information on upstream products corresponding to each of a plurality of lots is integrated with traceability-related information on a predetermined product to acquire traceability information on the predetermined product for each of the plurality of lots of upstream products. In this case, traceability information on a predetermined product is acquired for each of the plurality of lots of upstream products based on the usage ratio of each of the plurality of lots of the upstream products. Such a management method is called pattern management.

Operation Effects of First Embodiment

In the first embodiment, traceability information of a predetermined product can be acquired with higher accuracy by tracking each product included in the product tree, taking also into consideration the lot used for manufacturing.

Second Embodiment

In the first embodiment, the server device 1 integrates traceability information on upstream products and traceability-related information on downstream products to acquire traceability information on downstream products. In a second embodiment, the company terminal 2 corresponding to a downstream company integrates traceability information on an upstream product and traceability-related information on a downstream product and acquires traceability information on the downstream product without going through the server device 1. In the second embodiment, descriptions that overlap with those in the first embodiment will be omitted.

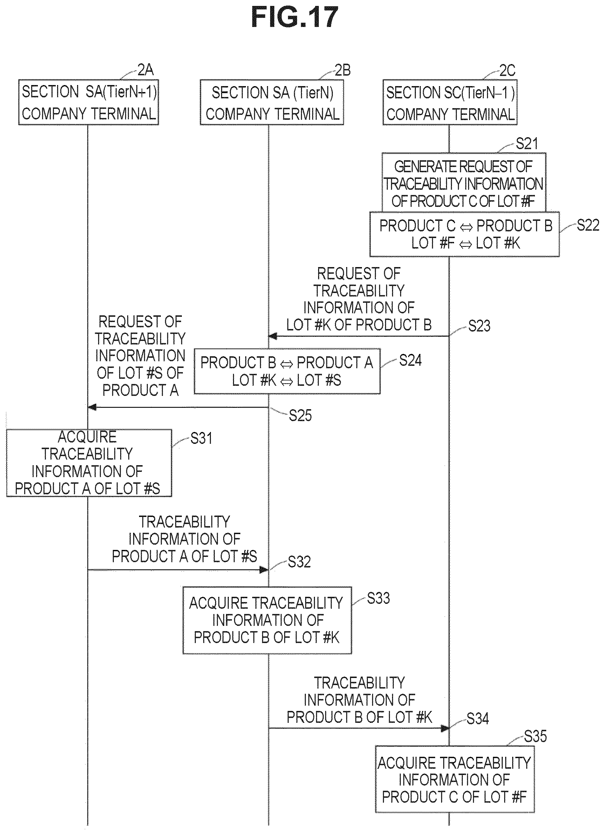

FIG. 17 is an example of a sequence of traceability information acquisition processing regarding a predetermined product according to the second embodiment. In the example illustrated in FIG. 17, a section SA is a TierN+1 section and is the most upstream section. A product A is a product manufactured by the section SA. A company terminal 2 corresponding to the section SA is set as a company terminal 2A. A section SB is a TierN section. A product B is a product manufactured by the section SB using the product A. A company terminal 2 corresponding to the section SB is set as a company terminal 2B. A section SC is a TierN-1 section. A product C is a product manufactured by the section SC using the product B. A company terminal 2 corresponding to the section SC is set as a company terminal 2C. In FIG. 17, a case where traceability information on the product C is acquired will be described as an example.

In S21, it is assumed that a request to acquire traceability-related information on the product C of a lot #F is generated at the company terminal 2C corresponding to the section SC. The acquisition request may be input into the company terminal 2C through an operation by an operator belonging to the section SC, for example. Alternatively, a request to acquire traceability information on the product C of the lot #F may be transmitted from the company terminal 2 corresponding to another company to the server device 1, and the server device 1, which accepts the request, may transmit the request to the company terminal 2C. The request is accepted by the information acquisition unit 214 of the company terminal 2C.

In S22, the information acquisition unit 214 of the company terminal 2C refers to a transaction information correspondence table corresponding to the section SC and specifies a lot #K of an upstream product B that is associated with the product C of the lot #F. In S23, the information acquisition unit 214 of the company terminal 2C transmits a request to acquire traceability information on the product B of the lot #K to the company terminal 2B corresponding to the section SB that manufactures the product B. The acquisition request is accepted by the information acquisition unit 214 of the company terminal 2B.

In S24, the information acquisition unit 214 of the company terminal 2B refers to the transaction information correspondence table corresponding to the section SB and specifies the lot #S of the upstream product A that is associated with product B of lot #K. In S25, the information acquisition unit 214 of the company terminal 2B transmits a request to acquire traceability information on the product A of the lot #S to the company terminal 2A corresponding to the section SA that manufactures the product A. The acquisition request is accepted by the information acquisition unit 214 of the company terminal 2A. Since the product A is the most upstream product, the information acquisition unit 214 of the company terminal 2A does not execute processing related to requests for traceability information on upstream products of the product A.

In S31, the information acquisition unit 214 of the company terminal 2A acquires traceability information on the product A of a lot #S. The information acquisition unit 214 of the company terminal 2A refers to a traceability-related information correspondence table corresponding to the section SA and acquires the traceability-related information associated with the product A of the lot #S. Since the product A is the most upstream product, traceability-related information on the product A of the lot #S becomes traceability information on the product A of the lot #S. In S32, the information acquisition unit 214 of the company terminal 2A transmits the traceability information on the product A of the lot #S to the company terminal 2B as a request source. The Information acquisition unit 214 of the company terminal 2B receives traceability information on the product A of the lot #S.

In S33, the information acquisition unit 214 of the company terminal 2B refers to the traceability-related information correspondence table corresponding to the section SB and acquires the traceability-related information associated with the product B of the lot #K, and then the information acquisition unit 214 integrates it with the traceability information on the product A of the lot #S and acquires the traceability information on the product B of the lot #K. In S34, the information acquisition unit 214 of the company terminal 2B transmits traceability information on the product B of the lot #K to the company terminal 2C as a request source. The information acquisition unit 214 of the company terminal 2C receives traceability information on the product B of the lot #K.

In S35, the information acquisition unit 214 of the company terminal 2C refers to the traceability-related information correspondence table corresponding to the section SC and acquires the traceability-related information associated with the product C of the lot #F, and then the information acquisition unit 214 integrates it with the traceability information on the product B of the lot #K. As a result, traceability information on the product C of the lot #F is acquired. When the request to acquire the traceability information on the product C of the lot #F is from the company terminal 2 corresponding to the section SC, the information acquisition unit 214 of the company terminal 2C outputs traceability information on the product C of the lot #F to a display or the like. When the request to acquire the traceability information on the product C of the lot #F is from the company terminal 2 corresponding to a company other than the section SC, the information acquisition unit 214 of the company terminal 2C transmits the traceability information on the product C of the lot #F to the server device 1, and the server device 1 transmits the traceability information on the product C of the lot #F to the company terminal 2 as a request source.

In S33 and S35, the integration of the traceability information on upstream products and the traceability-related information on downstream products by the company terminal 2B and the company terminal 2C is the same as in the first embodiment. Also, the lot association table group, product information, and the like of each section may be held by the server device 1 as in the first embodiment, or may be held in the storage device of the company terminal 2 corresponding to each section.

With the second embodiment, even when the company terminal 2 corresponding to the downstream company acquires the traceability information on the downstream product by integrating the traceability information on the upstream product and the traceability-related information on the downstream product without going through the server device 1, it is possible to acquire more accurate traceability information on downstream products, taking the lot into consideration.

This information may be exchanged via the server device 1 without directly exchanging requests and traceability information on upstream products that are responses to the requests between the company terminals 2. For example, the request to acquire traceability information on the product B of the lot #K transmitted from the company terminal 2C in S23 may be received by the server device 1, and the server device 1 may transmit it to the company terminal 2B. For example, the request to acquire the traceability information on the product A of the lot #S transmitted from the company terminal 2B in S25 may be received by the server device 1, and the server device 1 may transmit it to the company terminal 2A. For example, in S32, the company terminal 2A may transmit the traceability information on the product A of the lot #S to the server device 1, and store it in the storage area allocated to the company corresponding to the section SB in the server device 1. The server device 1 may notify the company terminal 2B that the traceability information on the product A of the lot #S has been acquired, and upon receiving this notification, the company terminal 2B may read and acquire the traceability information on the product A of the lot #S from the storage area allocated to the company corresponding to the section SB.

Other Modification Examples

The embodiments described above are merely examples, and the present disclosure may be implemented with appropriate changes within the scope of the gist thereof. For example, the processing and means described in the present disclosure can be implemented in any combination as long as no technical contradiction occurs.

Further, in the description of the embodiment, the server device 1 stores the product information in the database, but the product information may be stored by mediums other than the database.

Further, in the description of the embodiment, a case where the server device 1 generates a product tree is exemplified, but the roles of the server device 1 may be distributed and arranged among a plurality of company terminals 2. For example, product information may be stored by a distributed database using blockchain infrastructure. In this case, a product information database may be configured by a plurality of company terminals 2. In this case, the above-described processing of the server device 1 may be executed using a smart contract.

The storage areas in which each piece of product information is stored may also be distributed and arranged in a plurality of company terminals 2. In this case, the storage area exclusively allocated to each company may be located only in the company terminal 2 of the corresponding company. Further, the storage area that is shared by a plurality of companies may be distributed and arranged in the company terminals 2 related to sharing.

Further, the setting of the access authority to the storage area may be realized by the operating system of the server device 1, or may be realized by other authentication methods. For example, it is also possible to use public key cryptography. Further, when implementing a system using a blockchain infrastructure, the access authority may be granted using an electronic key.

Further, in the above-described embodiment, a plurality of companies included in the supply chain are described as companies that manufacture products. However, companies included in the supply chain do not necessarily have to be companies that manufacture products. For example, companies transporting, importing, storing, and wholesaling products may also be included in the companies that constitute the supply chain. In one example, some of the companies may be companies that do not execute manufacturing processes, such as trading companies, sales agents, import agents, and the like. Also, some of the companies may receive products from companies (upstream companies) located one level above and deliver products to companies (downstream companies) located one level below.

Further, in the above-described embodiment, assuming a supply chain of products related to automobiles, an OEM manufacturer is described as the most downstream company, and a company that supplies parts, materials, assemblies, and the like is described as a supplier. However, this is not necessarily the case for companies in the supply chain. Companies at each stage may be determined as appropriate depending on the product, or the like. In addition, the manufacturing activities carried out by each company until the final product is obtained may be determined as appropriate depending on the embodiment, and for example, it may include all activities that may be performed until the final product is obtained, such as excavation, processing, assembly, transportation, and storage.

Further, in the above-described embodiment, it is assumed that each company orders a certain material from one company. However, in the above-described embodiment, the ordering format of each company does not have to be limited to this example. At least some of the companies belonging to the supply chain may order the same product from a plurality of upstream companies and selectively use the obtained upstream products for the company's own products. For example, in the example illustrated in FIG. 2, a product A11_1, a product A11_2, or a product A11_3 of Tier2 may be selectively used for the product A1 of Tier1. In this case, the server device 1 may hold a linking relationship for each pattern used. In the above-described example, the server device 1 may hold linking information for the product A1 of Tier1, such as a pattern 1 "product A11_1, ... of Tier2", a pattern 2 "product A1_2, ... ", and a pattern 3 "product A11_3, ... ". In response to this, the server device 1 may execute the calculation (integration) of the traceability information for each pattern. In this case, in one example, the server device 1 may output calculation results for each pattern. In another example, the server device 1 may calculate statistics such as the maximum value, minimum value, average value, variance, standard deviation, and median value of the calculation results from the calculation results, and output the calculated statistics.

Further, the processing described as being performed by one device may be shared and executed by a plurality of devices. Alternatively, the processing described as being performed by different devices may be performed by one device. In a computer system, the hardware configuration (server configuration) that implements each function can be flexibly changed.

The present disclosure can also be realized by supplying a computer program implementing the functions described in the above-described embodiments to a computer, and having one or more processors included in the computer read and execute the program. Such a computer program may be provided to the computer by a non-temporary computer-readable storage medium connectable to a system bus of the computer, or may be provided to the computer via a network. The non-temporary computer-readable storage medium includes, for example, any type of disk, such as a magnetic disk (floppy (registered trademark) disk hard disk drive (HDD), and the like), and an optical disk (CD-ROM, DVD disk, Blu-ray disk, and the like), a read-only memory (ROM), a random access memory (RAM), an EPROM, an EEPROM, a magnetic card, a flash memory, an optical card, or any type of medium suitable for storing an electronic instruction.

**Claims**

1. An information processing device (1) comprising:
   a control unit (11) configured to execute:

   first processing of acquiring a first association between identification information of a first lot of a first product manufactured by a first section of a plurality of sections involved in manufacturing a predetermined product, each of which ships products in lot units, and identification information of a second lot of a second product manufactured by a second section of the plurality of sections using the first product of the first lot;
   second processing of acquiring a second association between the identification information of the second lot of the second product and identification information of first traceability-related information measured in a manufacturing process of the second product of the second lot; and,
   third processing of acquiring second traceability information obtained by tracing a process from raw materials or parts to the second product of the second lot by integrating first traceability information and the first traceability-related information based on the first association and the second association, the first traceability information being obtained by tracing a process from the raw materials or the parts to the first product of the first lot.

2. The information processing device (1) according to claim 1, wherein
   the control unit (11), in the third processing,
   when a first value indicating the first traceability information and a second value indicating the first traceability-related information have different units, converts the first value into a value expressed in the unit of the second value using a predetermined conversion factor (Ck).

3. The information processing device (1) according to claim 1 or 2, wherein
   the control unit (11) is configured to, in the third processing,
   when there is a plurality of first lots of the first product used to manufacture the second product of the second lot, acquire the second traceability information by integrating the first traceability information and the first traceability-related information using an average value of first values indicating the first traceability information about each of the first products of the first lots.

4. The information processing device (1) according to claim 1 or 2, wherein
   the control unit (11) is configured to, in the third processing,
   when there is a plurality of first lots of the first product used to manufacture the second product of the second lot, acquire the second traceability information by integrating the first traceability information and the first traceability-related information using a weighted average value of first values indicating the first traceability information for each of the first products of the first lots, weighted according to a usage ratio of the first product for each of the first products of the first lots.

5. The information processing device (1) according to claim 1 or 2, wherein
   the control unit (11) is configured to, in the third processing,
   when there is a plurality of first lots of the first product used to manufacture the second product of the second lot, acquire the second traceability information for each of the first products of the first lots.

6. The information processing device (1) according to any one of claims 1 to 5, wherein
   the control unit (11) is configured to, in the first processing,
   receive the first association from an account in the second section, store the first association in a storage unit (12), and acquire the first association from the storage unit (12).

7. The information processing device (1) according to claim 6, wherein
   in the third processing, the control unit (11) is configured to:

   acquire, when the second lot of the second product is specified, the identification information of the first lot of the first product that is associated with the identification information of the second lot of the second product in the first association from the storage unit (12); and

acquire the first traceability information on the first product of the first lot corresponding to the acquired identification information.

8. The information processing device (1) according to any one of claims 1 to 5, wherein
the control unit (11) is configured to, in the second processing,
receive the second association from an account in the second section, store the second association in a storage unit (12), and acquire the second association from the storage unit (12).

9. The information processing device (1) according to any one of claims 1 to 8, wherein
the control unit (11) is configured to
acquire third traceability information obtained by tracing a process from the raw materials or the parts to the predetermined product of a predetermined lot by executing the first processing, the second processing, and the third processing, in order, from a most upstream section to a most downstream section for each of a plurality of sets of two sections in a relationship between the first section and the second section among the plurality of sections.

10. The information processing device (1) according to any one of claims 1 to 9, wherein
at least some of the plurality of sections are associated with companies.

11. The information processing device (1) according to any one of claims 1 to 10, wherein
at least some of the plurality of sections are associated with departments in one company.

12. An information processing device (1) wherein
traceability information is at least one of a Carbon Footprint of Products (CFP) value, a recycling rate, and a score indicating a degree of fulfilling due diligence (DD) information.

13. A method executed by a computer, the method comprising:

first processing of acquiring a first association between identification information of a first lot of a first product manufactured by a first section of a plurality of sections involved in manufacturing a predetermined product, each of which ships products in lot units, and identification information of a second lot of a second product manufactured by a second section of the plurality of sections using the first product of the first lot;
second processing of acquiring a second association between identification information of the second lot of the second product and identification information of first traceability-related information measured in a manufacturing process of the second product of the second lot; and
third processing of acquiring second traceability information obtained by tracing a process from raw materials or parts to the second product of the second lot by integrating first traceability information and the first traceability-related information based on the first association and the second association, the first traceability information being obtained by tracing a process from the raw materials or the parts to the first product of the first lot.

14. The method according to claim 13, wherein
the computer, in the third processing,
when a first value indicating the first traceability information and a second value indicating the first traceability-related information have different units, converts the first value into a value expressed in the unit of the second value using a predetermined conversion factor (Ck).

15. A non-temporary storage medium storing instructions that are executable by one or more processors and cause the one or more processors to execute the following functions comprising:

acquiring a first association between the identification information of a first lot of a first product manufactured by a first section of a plurality of sections involved in manufacturing a predetermined product, each of which ships products in lot units, and identification information of a second lot of a second product manufactured by a second section of the plurality of sections using the first product of the first lot,
acquiring a second association between identification information of the second lot of the second product and identification information of first traceability-related information measured in a manufacturing process of the second product of the second lot; and
acquiring second traceability information obtained by tracing a process from raw materials or parts to the second product of the second lot by integrating first traceability information and the first traceability-related information based on the first association and the second association, the first traceability information being obtained by tracing a process from the raw materials or the parts to the first product of the first lot.

# FIG. 1

DELIVERY     DELIVERY     DELIVERY

OEM COMPANY
(Tier0)

COMPANY CA
(Tier1)

COMPANY CB
(Tier2)

COMPANY CC
(Tier3)

DOWNSTREAM                                         UPSTREAM

# FIG. 2

| Tier0 | Tier1 | Tier2 | Tier3 |
|-------|-------|-------|-------|

FINAL PRODUCT X — PRODUCT A1 — PRODUCT A11 — PRODUCT A111

PRODUCT B1

PRODUCT A12 — PRODUCT A121

PRODUCT C1

PRODUCT A13

PRODUCT A122

PRODUCT D1

. . .

PRODUCT A123

. . .

TRACEABILITY INFORMATION OF PRODUCT (TierN) =
TRACEABILITY-RELATED INFORMATION OF PRODUCT (TierN+1)
+ $\Sigma$TRACEABILITY INFORMATION OF PRODUCT (TierN)
$\times$ CONVERSION FACTOR $\times$ ACTIVITY AMOUNT

# FIG. 3

| SECTION SA<br>(TierN+1) | SECTION SB<br>(TierN) | SECTION SC<br>(TierN−1) |
|---|---|---|
| PRODUCT A | PRODUCT B | PRODUCT C |

M1 MONTH Y YEAR — TRACEABILITY –RELATED INFORMATION A(1)

TRACEABILITY –RELATED INFORMATION B(1)

TRANSACTION INFORMATION

M2 MONTH Y YEAR — TRACEABILITY –RELATED INFORMATION A(2)

LOT AR1

TRACEABILITY –RELATED INFORMATION B(2)

TRANSACTION INFORMATION

LOT BR2

M3 MONTH Y YEAR — TRACEABILITY –RELATED INFORMATION A(3)

TRACEABILITY –RELATED INFORMATION B(3)

M4 MONTH Y YEAR — TRACEABILITY –RELATED INFORMATION A(4)

TRACEABILITY –RELATED INFORMATION B(4)

# FIG. 4

SERVER DEVICE — 1

CONTROL UNIT — 11

- CPU
- RAM
- ROM

STORAGE UNIT — 12

- PROGRAM
- ACCOUNT INFORMATION
- PRODUCT INFORMATION
- TRANSACTION INFORMATION

COMMUNICATION MODULE — 13

INPUT/OUTPUT DEVICE — 14

# FIG. 5

COMPANY TERMINAL — 2

CONTROL UNIT — 21

CPU

RAM

ROM

STORAGE UNIT — 22

PROGRAM

COMMUNICATION MODULE — 23

INPUT/OUTPUT DEVICE — 24

# FIG. 6

1

SERVER DEVICE

11

STORAGE UNIT

111
INFORMATION
COLLECTING UNIT

113
LINKING UNIT

114
INFORMATION
PROVIDING UNIT

12

STORAGE UNIT

STORAGE
AREA

PRODUCT
INFORMATION

TRANSACTION
INFORMATION

LOT
ASSOCIATION
TABLE GROUP

STORAGE
AREA

PRODUCT
INFORMATION

TRANSACTION
INFORMATION

LOT ASSOCIATION
TABLE GROUP

ACCOUNT
INFORMATION

# FIG. 7

COMPANY TERMINAL

2

CONTROL UNIT

21

INFORMATION GENERATION UNIT

211

LINKING REQUEST UNIT

213

INFORMATION ACQUISITION UNIT

214

# FIG. 8

EXAMPLE OF PRODUCT INFORMATION

| Y2 MONTH X YEAR | | |
|---|---|---|
| Y1 MONTH X YEAR | | |
| COMPANY ID | | C001 |
| COMPANY NAME | | COMPANY CA |
| PRODUCT ID | | P001 |
| PRODUCT NAME | | PRODUCT A |
| LINKING-RELATED INFORMATION | UPSTREAM PRODUCT INFORMATION | POINTER |
| | TERMINATION FLAG | NO |
| TRACEABILITY-RELATED INFORMATION | TOTAL USAGE AMOUNT (LITHIUN) | X11[g] |
| | USAGE AMOUNT OF RECYCLED MATERIALS (LITHIUN) | X12[g] |
| | TOTAL USAGE AMOUNT (NICKEL) | X21[g] |
| | USAGE AMOUNT OF RECYCLED MATERIALS (NICKEL) | X22[g] |
| | TOTAL USAGE AMOUNT (COBALT) | X31[g] |
| | USAGE AMOUNT OF RECYCLED MATERIALS (COBALT) | X32[g] |
| | TOTAL USAGE AMOUNT (LEAD) | X41[g] |
| | USAGE AMOUNT OF RECYCLED MATERIALS (LEAD) | X42[g] |
| | $CO_2$ EMISSION AMOUNT DURING MANUFACTURING | . . . |
| | DD INFORMATION | . . . |
| . . . | | . . . |

. . .

# FIG. 9

EXAMPLE OF TRANSACTION INFORMATION

| | |
|---|---|
| MANUFACTURING COMPANY ID | C001 |
| MANUFACTURING COMPANY NAME | COMPANY CA |
| MANUFACTURED PRODUCT ID | P001 |
| MANUFACTURED PRODUCT NAME | PRODUCT A |
| UPSTREAM COMPANY ID | C002 |
| UPSTREAM PRODUCT ID | P003 |
| SHIPPING DATE | YYYYMMDD |
| DOWNSTREAM COMPANY ID | C003 |

# FIG. 10

EXAMPLE OF TRANSACTION INFORMATION CORRESPONDENCE TABLE

| TARGET COMPANY'S OWN PRODUCT LOT ID | | | UPSTREAM LOT ID | | | |
|---|---|---|---|---|---|---|
| COMPANY ID | PRODUCT ID | SHIPPING DATE | COMPANY ID | PRODUCT ID | SHIPPING DATE | RATIO |
| | | | | | | |
| | | | | | | |
| | | | | | | |

.
.
.

# FIG.11

EXAMPLE OF TRACEABILITY-RELATED INFORMATION CORRESPONDENCE TABLE

| COMPANY'S OWN PRODUCT LOT ID | | | TRACEABILITY-RELATED INFORMATION ID | | |
|---|---|---|---|---|---|
| COMPANY ID | PRODUCT ID | SHIPPING DATE | COMPANY ID | PRODUCT ID | MEASUREMENT MONTH |
| | | | | | |

# FIG.12

LOT ASSOCIATION SETTING SCREEN

TARGET PRODUCT
(COMPANY'S OWN PRODUCT)

PRODUCT NUMBER

P001

LOT ID (SHIPPING DATE)

CORRESPONDENCE
TRACEABILITY-RELATED
INFORMATION
(MEASUREMENT MONTH)

UPSTREAM PRODUCT LOT ID

UPSTREAM COMPANY

☐ A Co., Ltd.
☐ B Co., Ltd.
☑ C Co., Ltd.
☐ D Co., Ltd.
☐ E Co., Ltd.
☐ F Co., Ltd.

UPSTREAM PRODUCT

☐ P10001
☑ P10002
☐ P10003
☐ P10004
☐ P10005
☐ P10006
☐ ...

TRANSACTION ID
(TRANSACTION DATE)

SET ASSOCIATION

# FIG.13

COMPANY TERMINAL 2

SERVER DEVICE 1

INPUT LOT ASSOCIATION INFORMATION S11

LOT ASSOCIATION INFORMATION S12

REGISTER LOT ASSOCIATION INFORMATION IN LOT ASSOCIATION TABLE GROUP S13

# FIG.14

```
        ┌─────────────────────────────────────┐
        │    TRACEABILITY INFORMATION         │
        │  ARITHMETIC CALCULATION PROCESSING  │
        └─────────────────────────────────────┘
                        │
                        ▼
                                          OP101
               ◇ RECEIVE REQUEST OF ◇        NO      ┌──────────┐
               ◇ TRACEABILITY      ◇ ──────────────▶ │   END    │
               ◇ INFORMATION       ◇                 └──────────┘
                        │ YES
                        │               OP102
                        ▼
        ┌─────────────────────────────────────┐
        │ SPECIFY LOT OF TARGET PRODUCT P (TierP) │
        └─────────────────────────────────────┘
                        │
                        ▼
        ┌─────────────────────────────────────┐    OP103
        │  SPECIFY UPSTREAM PRODUCTS (NODES)  │
        │    THAT REACH TARGET PRODUCT P      │
        │   (NODE OF TierP) ON PRODUCT TREE   │
        └─────────────────────────────────────┘
                        │
                        ▼
        ╱  REPEAT FROM TierM TO TierP          ╲
        ╱  REPEAT FOR EACH NODE OF TierN       ╲
        ┌─┬───────────────────────────────┬─┐    OP104
        │ │   ACQUIRE AND HAND DOWN       │ │
        │ │   TRACEABILITY INFORMATION    │ │
        └─┴───────────────────────────────┴─┘
        ╲                                     ╱
                        │
                        ▼                     OP105
               ◇ TierN = TierP? ◇ ──────────────── YES ──┐
                        │ NO                              │
                        ▼                                 │
        ╲                                     ╱           │
                        │ ◀────────────────────────────────┘
                        ▼
        ┌─────────────────────────────────────┐    OP106
        │  OUTPUT TRACEABILITY INFORMATION    │
        │      OF TARGET PRODUCT P            │
        └─────────────────────────────────────┘
                        │
                        ▼
                  ┌──────────┐
                  │   END    │
                  └──────────┘
```

35

# FIG.15

```
┌─────────────────────────────────────┐
│   ACQUISITION AND HANDING DOWN OF    │
│      TRACEABILITY INFORMATION        │
└─────────────────────────────────────┘
                   │
                   ▼
┌─────────────────────────────────────┐
│  SPECIFY LOT OF PRODUCT n BY TRACING │── OP201
│  TRANSACTION INFORMATION CORRESPONDENCE
│  TABLE FROM TierP OF TARGET PRODUCT P TO TierN
└─────────────────────────────────────┘
                   │
                   ▼
┌─────────────────────────────────────┐
│  ACQUIRE TRACEABILITY INFORMATION (TierN+1) │── OP202
│  OF LOT OF UPSTREAM PRODUCT ASSOCIATED
│  WITH LOT OF PRODUCT n (TierN)
└─────────────────────────────────────┘
                   │
                   ▼
┌─────────────────────────────────────┐
│  ACQUIRE TRACEABILITY-RELATED INFORMATION │── OP203
│  ASSOCIATED WITH LOT OF PRODUCT n (TierN)
└─────────────────────────────────────┘
                   │
                   ▼
              ◇ SAME UNIT? ◇──── OP204
                   │          YES
                  NO           │
                   ▼           │
┌─────────────────────────────┐│── OP205
│  CONVERT UNIT OF TRACEABILITY ││
│  INFORMATION (TierN+1)        ││
└─────────────────────────────┘│
                   │◄──────────┘
                   ▼
┌─────────────────────────────────────┐
│            ACQUIRE                   │── OP206
│   TRACEABILITY INFORMATION OF        │
│   PRODUCT n OF TARGET LOT            │
│   BY INTEGRATING TRACEABILITY-RELATED
│   INFORMATION OF PRODUCT n OF TARGET LOT
│   AND TRACEABILITY INFORMATION (TierN+1) OF
│   UPSTREAM PRODUCT OF TARGET LOT
└─────────────────────────────────────┘
                   │
                   ▼
┌─────────────────────────────────────┐
│  HAND DOWN LOT ID AND TRACEABILITY   │── OP207
│  INFORMATION OF PRODUCT n TO DOWNSTREAM
│  PRODUCT OF TierN-1
└─────────────────────────────────────┘
                   │
                   ▼
               ( RETURN )
```

# FIG.16

SECTION SA
(TierN+1)

SECTION SB
(TierN)

SECTION SC
(TierN−1)

PRODUCT A      PRODUCT B      PRODUCT C

M1 MONTH
Y YEAR

TRACEABILITY
−RELATED
INFORMATION
A(1)

TRACEABILITY
−RELATED
INFORMATION
B(1)

TRANSACTION
INFORMATION

LOT AR11

TRANSACTION
INFORMATION

LOT AR12

M2 MONTH
Y YEAR

TRACEABILITY
−RELATED
INFORMATION
A(2)

TRACEABILITY
−RELATED
INFORMATION
B(2)

TRANSACTION
INFORMATION

LOT BR2

M3 MONTH
Y YEAR

TRACEABILITY
−RELATED
INFORMATION
A(3)

TRACEABILITY
−RELATED
INFORMATION
B(3)

M4 MONTH
Y YEAR

TRACEABILITY
−RELATED
INFORMATION
A(4)

TRACEABILITY
−RELATED
INFORMATION
B(4)

TRACEABILITY INFORMATION OF PRODUCT B
(1) AVERAGE
(2) WEIGHTED AVERAGE
(3) PATTERN MANAGEMENT

# FIG.17

Europäisches
Patentamt

European
Patent Office

Office européen
des brevets

# EUROPEAN SEARCH REPORT

Application Number

EP 24 15 7177

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2022/237628 A1 (WOLLACK SCOTT WILLIAM [US] ET AL) 28 July 2022 (2022-07-28) * paragraph [0045] - paragraph [0058] * * paragraph [0079] - paragraph [0079] * * figures 2, 3 * ----- | 1-15 | INV. G06Q10/08 G06Q10/0875 G06Q10/0833 G06Q10/087 G06Q50/04 G06Q10/10 G05B19/418 |
| X | US 2016/092812 A1 (BENNINGTON DAVID T [US] ET AL) 31 March 2016 (2016-03-31) * paragraph [0022] - paragraph [0022] * * paragraph [0030] - paragraph [0038] * * figure 2 * ----- | 1-15 | |
| X | US 2013/173596 A1 (ROEDIGER KARL CHRISTIAN [DE] ET AL) 4 July 2013 (2013-07-04) * paragraph [0040] - paragraph [0045] * * figure 4 * ----- | 1-15 | |

|  | TECHNICAL FIELDS SEARCHED (IPC) |
|---|---|
|  | G06Q G05B |

The present search report has been drawn up for all claims

| Place of search | Date of completion of the search | Examiner |
|---|---|---|
| Munich | 23 July 2024 | Melis, Caterina |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 24 15 7177

This annex lists the patent family members relating to the patent documents cited in the above-mentioned European search report.
The members are as contained in the European Patent Office EDP file on
The European Patent Office is in no way liable for these particulars which are merely given for the purpose of information.

23-07-2024

| Patent document cited in search report | | Publication date | Patent family member(s) | | Publication date |
|---|---|---|---|---|---|
| US 2022237628 | A1 | 28-07-2022 | AU 2020292276 A1 | | 20-01-2022 |
| | | | CN 114175015 A | | 11-03-2022 |
| | | | EP 3983908 A1 | | 20-04-2022 |
| | | | KR 20220024553 A | | 03-03-2022 |
| | | | US 2022237628 A1 | | 28-07-2022 |
| | | | WO 2020252013 A1 | | 17-12-2020 |
| US 2016092812 | A1 | 31-03-2016 | NONE | | |
| US 2013173596 | A1 | 04-07-2013 | NONE | | |

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004171146 A